# FASCICULE DE BREVET EUROPEEN

(11) **EP 3 628 034 B1**
(45) Date de publication et mention de la délivrance du brevet: **25.11.2020**
(21) Numéro de dépôt: 19728888.9
(22) Date de dépôt: 16.05.2019
(51) Int. Cl.: B29C 64/112, B05D 1/26, B29C 64/209, B33Y 10/00, B33Y 30/00, B05C 5/02, B05C 11/10

(54) **SYSTEME DE DEPOT DE MATIERE ET PROCEDE ASSOCIE**
SYSTEM ZUM ABSCHEIDEN VON MATERIAL UND ZUGEHÖRIGES VERFAHREN
SYSTEM FOR DEPOSITING MATERIAL AND ASSOCIATED METHOD

(30) Priorité: 30.05.2018 FR 1854610
(43) Date de publication de la demande: 01.04.2020
(73) Titulaire: Kelenn Technology, 91120 Palaiseau (FR)
(72) Inventeur: BERTHELOT, Thomas, 91940 LES ULIS (FR); ROUSSEAU, Didier, 91120 PALAISEAU (FR)
(74) Mandataire: IPAZ
(86) Numéro de dépôt international: PCT/EP2019/062656
(87) Numéro de publication internationale: WO 2019/228821

(56) Documents cités:
- EP-A2- 2 206 562
- US-A1- 2017 008 755

## Description

### Domaine technique

La présente invention se rapporte au domaine des procédés et systèmes de dépôt de matière. La présente invention concerne le dépôt de matière solide, de pâte, de liquide visqueux ou à l'inverse de liquide très faiblement visqueux.

La présente invention concerne en particulier les systèmes et procédés de fabrications additives sur substrats plans ou 3D complexes et concerne, à titre d'exemple, les domaines du prototypage, de l'impression 3D ou de la bio-impression.

### Etat de la technique antérieure

On connait dans l'état de la technique le document US2017/008755A1 qui décrit un procédé de distribution de micro-volume de liquide et un distributeur associé et le document EP2206562A2 qui décrit un appareil et un procédé de distribution pulsé de liquide.

On connait dans l'état de la technique antérieure les procédés d'impression sans contact. Il existe différentes variantes de ces procédés, chacune des variantes requiert un système de dépôt propre comportant une technologie de dépôt adaptée à un type de matière à déposer en particulier. On connait la technique de jet d'encre qui est utilisée dans le cas des encres présentant de faibles viscosités généralement comprises entre 2 et 20 centipoises. On connait les distributeurs de pâte (solid paste dispenser) et les techniques de transfert (par exemple Laser-Induced Forward Transfer) utilisés dans le cas d'encres très visqueuses ou de pâtes présentant une viscosité généralement comprises entre 2000 et 50000 centipoises. On connait également les techniques d'extrusion réalisées sur de la matière solide, des encres très visqueuses ou de pâtes. Enfin, on connait la technique de revêtement par ménisque (meniscus coating) mais cette dernière permet de réaliser uniquement des aplats.

Aucune des techniques précitées ne permet de déposer tout type d'encre. C'est particulièrement le cas avec la technologie jet d'encre pour laquelle un appareil de dépôt ne peut être utilisé que pour des encres liquides spécialement formulées pour ce dernier.

Hormis le procédé jet d'encre, ces techniques n'offrent pas une bonne maitrise des quantités déposées, en particulier lors des phases de démarrage et d'arrêt du dépôt.

Enfin, aucune de ces techniques ne permet de déposer des quantités de matière de dimensions comprises entre quelques nanomètres et plusieurs microns.

On connait dans l'état de la technique antérieure les procédés d'impression avec contact. Parmi ces procédés, on compte les techniques de microcontact (microcontact printing) et de dépôt par micro-réseau (spotter array). Ces deux techniques ne permettent de déposer que des encres de faibles viscosités. On connait également la technique de sérigraphie mais cette dernière est adaptée au dépôt de pâtes.

Les techniques de dépôt par contact permettent de réaliser des dépôts que sur des surfaces de dépôt planes et très peu rugueuses. Les techniques de dépôt par contact ne permettent en aucun cas de procéder à des dépôts sur des surfaces rugueuses et/ou présentant des topographies complexes.

Un but de l'invention est notamment :
- de déposer, avec un même système de dépôt, de la matière solide à extruder, de la matière liquide à forte viscosité et de la matière liquide à faible viscosité, et/ou
- de déposer de la matière sur tout type de substrat présentant tout type de topographie et tout type de rugosité, et/ou
- de procéder, avec un même système de dépôt, au dépôt de matière sous forme de matrice de points et sous forme de motifs, et/ou
- d'améliorer la qualité du dépôt, en particulier lors du démarrage et de l'arrêt du dépôt, et/ou
- de déposer des épaisseurs de matière comprises entre quelques nanomètres et plusieurs microns, et/ou
- de modifier la quantité déposée, en cours de dépôt, afin de modifier par exemple la forme et/ou une dimension et/ou une géométrie du motif déposé, et/ou
- d'obtenir un dépôt de matière homogène et constant indépendamment de la quantité de matière restante dans le contenant.

### Exposé de l'invention

A cet effet, selon un premier aspect de l'invention, il est proposé un système de dépôt comprenant :
- un contenant agencé pour contenir de la matière à déposer et comprenant une entrée et une sortie,
- un système pneumatique agencé pour injecter, par l'entrée, du gaz dans le contenant de sorte que ce gaz exerce, directement ou indirectement, une pression sur la matière à déposer. Le système de dépôt comprend des moyens de commande du système pneumatique agencés pour commander au moins :
   - une injection, par l'entrée, de gaz à une pression de réglage PM, de sorte qu'un ménisque convexe de matière à déposer fasse saillie du contenant au niveau de la sortie, puis
   - au moins une injection, par l'entrée, de gaz à respectivement au moins une pression de dépôt PD, PDᵢ supérieure à la pression de réglage PM, de sorte que la matière à déposer s'écoule hors du contenant par la sortie.

Système de dépôt selon le premier aspect de l'invention, dans lequel les moyens de commande du système pneumatique peuvent être agencés pour commander plusieurs injections, par l'entrée, de gaz à plusieurs pressions de dépôt PDᵢ différentes les unes des autres de sorte que la matière à déposer s'écoule selon des vitesses différentes hors du contenant par la sortie, lesdites pressions de dépôt PDᵢ étant supérieures à la pression de réglage PM.

Système de dépôt selon le premier aspect de l'invention, dans lequel le système pneumatique peut comprendre une source, dite de réglage, agencée pour produire du gaz à la pression de réglage PM et au moins une source, dite de dépôt, agencée pour produire du gaz à au moins une pression de source PS, PSⱼ, ladite au moins une pression de source PS, PSⱼ étant, de préférence, au moins 1,01 fois, de préférence encore au moins 1,015 fois, supérieure à la pression de réglage PM.

Selon un premier perfectionnement du système de dépôt conforme au premier aspect de l'invention, le système pneumatique peut comprendre une seule source de dépôt.

Dans le cas où le système comprend une seule source de dépôt et une seule pression de dépôt PD, la pression PS de la source unique peut être égale à une unique pression de dépôt PD.

Système de dépôt selon le premier perfectionnement, dans lequel la pression de sources PS peut être supérieure à la pression de dépôt PD, ou à au moins une des pressions de dépôt PDᵢ.

Système de dépôt selon le premier perfectionnement, dans lequel la pression de sources PS peut être inférieure à la pression de dépôt PD, ou à au moins une des pressions de dépôt PDᵢ.

Système de dépôt selon le premier perfectionnement, dans lequel la pression de source PS peut être égale à la pression de dépôt PD, ou à une des pressions de dépôt PDᵢ.

La pression de sources PS peut être supérieure ou égale à une pression de dépôt PDₛᵤₚ, ladite pression de dépôt PDₛᵤₚ étant supérieure à chacune des autres pressions de dépôt PDᵢ.

La pression de réglage PS peut être inférieure ou égale à une pression de dépôt PD_{inf}, ladite pression de dépôt PD_{inf} étant inférieure à chacune des autres pressions de dépôt PDᵢ.

Système de dépôt selon le premier perfectionnement, dans lequel le système pneumatique peut être agencé de sorte que la pression de dépôt PD, ou plusieurs des pressions de dépôt PDᵢ, de gaz injecté dans le contenant est obtenue par :
- mélange de gaz provenant de la source de réglage et de gaz provenant de la source de dépôt, et/ou
- diminution ou augmentation de la pression de gaz provenant de la source de dépôt, et/ou
- augmentation de la pression de gaz provenant de la source de réglage.

Selon un second perfectionnement du système de dépôt du système de dépôt conforme au premier aspect de l'invention, le système pneumatique peut comprendre plusieurs sources de dépôt, chacune desdites plusieurs sources de dépôt étant agencée pour produire du gaz à une pression de source PSⱼ différente de chacune des autres pressions de source PSⱼ des autres sources de dépôt.

Système de dépôt selon le second perfectionnement, dans lequel chaque pression de source Psⱼ peut être égale à une pression de dépôt PDᵢ différente.

Système de dépôt selon le second perfectionnement, dans lequel au moins une pression de source PSⱼ peut être supérieure à la pression de dépôt PD, ou à chaque pression de dépôt PDᵢ.

Système de dépôt selon le second perfectionnement, dans lequel au moins une pression de source PSⱼ peut être inférieure à la pression de dépôt PD, ou à chaque pression de dépôt PDᵢ.

Système de dépôt selon le second perfectionnement, dans lequel le système pneumatique peut être agencé de sorte que la pression de dépôt PD, ou plusieurs des pressions de dépôt PDᵢ, de gaz injecté dans le contenant est obtenue par :
- mélange de gaz provenant de la source de réglage et de gaz provenant d'au moins une des sources de dépôt, et/ou
- mélange de gaz provenant d'une source de dépôt et de gaz provenant d'au moins une autre des sources de dépôt, et/ou
- diminution ou augmentation de la pression de gaz provenant d'au moins une des sources de dépôt, et/ou
- augmentation de la pression de gaz provenant de la source de réglage.

Système de dépôt selon le premier aspect de l'invention, dans lequel la source de réglage et/ou chaque source de dépôt peut être un réservoir stockant du gaz à sa pression respective de réglage et/ou de source.

Système de dépôt selon le premier aspect de l'invention, dans lequel chaque réservoir considéré peut présenter un volume au moins 5 fois, de préférence au moins 10 fois, supérieur à la somme du volume du contenant et du volume d'un circuit de gaz reliant ce réservoir considéré à l'entrée.

De manière d'avantage préférée, chaque réservoir considéré peut présenter un volume au moins 20 fois, de préférence au moins 50 fois supérieur à la somme du volume du contenant et du volume d'un circuit de gaz reliant ce réservoir considéré à l'entrée.

Système de dépôt selon le premier aspect de l'invention, dans lequel les moyens de commande peuvent comprendre une vanne multivoies, dite de commutation, reliée :
- à l'entrée du contenant,
- à au moins une des sources,
- à un système de remise à l'air,
ladite vanne multivoies étant agencée pour commuter d'une injection de gaz provenant d'une source de dépôt ou de réglage vers une injection de gaz provenant d'une autre source de dépôt ou de réglage de manière à opérer un changement instantané de pression dans le contenant.

Système de dépôt selon le premier aspect de l'invention, dans lequel la pression de réglage PM et la pression de dépôt PD, ou chacune des pressions de dépôt PDᵢ, peuvent être inférieures ou égales à 200 kPa au-dessus de la pression atmosphérique.

Système de dépôt selon le premier aspect de l'invention, dans lequel la pression de réglage PM peut être inférieure à la pression atmosphérique.

Système de dépôt selon l'invention, dans lequel la pression de réglage PM et la pression de dépôt PD, ou chacune des pressions de dépôt PDᵢ, peuvent être inférieures à la pression atmosphérique.

Système de dépôt selon l'invention, dans lequel la pression de réglage PM et une des pressions de dépôt PDᵢ peuvent être inférieures à la pression atmosphérique, et une autre des pressions de dépôt peut être supérieure à la pression atmosphérique.

La pression de réglage PM peut être inférieure à la pression atmosphérique de sorte que la matière à déposer, présentant une viscosité telle qu'elle devrait s'écouler, hors du contenant, si la pression PM était égale ou supérieure à la pression atmosphérique, forme le ménisque convexe et ne s'écoule pas.

Système selon le premier aspect de l'invention, pouvant comprendre un système de mise en mouvement agencé pour :
- mettre en mouvement le contenant relativement à une surface de dépôt, ou inversement, dans un plan parallèle à la surface de dépôt, dit plan xy, selon un trajet prédéterminé, et/ou
- éloigner et/ou rapprocher le contenant relativement de la surface de dépôt, ou inversement.

Système selon le premier aspect de l'invention, pouvant comprendre une unité de traitement programmée et/ou configurée pour commander une quantité de matière déposée sur la surface de dépôt en fonction d'une position relative du contenant par rapport à ladite surface en opérant :
- une modification, et/ou une adaptation, de la vitesse relative du contenant par rapport à la surface de dépôt, ou inversement, et/ou
- une modification, et/ou une adaptation, d'une distance entre la sortie du contenant et la surface de dépôt, et/ou
- une modification, et/ou une adaptation, de la pression de dépôt PDᵢ sélectionnée.

Système de dépôt selon le premier aspect de l'invention, pouvant comprendre un ou plusieurs dispositifs d'imagerie optique agencés pour imager une zone de dépôt, et/ou une zone comprenant la sortie du contenant, et/ou au moins une partie de la surface de dépôt, de sorte que l'unité de traitement soit agencée pour contrôler la quantité de matière déposée et/ou la position relative du contenant par rapport à la surface de dépôt et, en fonction de ce contrôle, soit agencée pour modifier et/ou ajuster :
- la pression de gaz injecté dans le contenant, et/ou
- une vitesse de déplacement relative du contenant par rapport à la surface de dépôt, ou inversement, et/ou
- la distance entre la sortie et la surface de dépôt, et/ou
- la position relative du contenant par rapport à la surface de dépôt.

Système de dépôt selon le premier aspect de l'invention, pouvant comprendre un capteur de distance agencé pour, préalablement au dépôt de la matière à déposer, mesurer une topographie de la surface de dépôt le long du trajet prédéterminé selon lequel sera déposée la matière à déposer de sorte à, lors du dépôt, maintenir constante une distance entre la sortie du contenant et la surface de dépôt lors du déplacement du contenant selon le trajet prédéterminé.

Système de dépôt selon le premier aspect de l'invention, dans lequel les moyens de commande peuvent comprendre une vanne multivoies de régulation de pression, dite vanne de dépôt, étant située, par rapport à un chemin de gaz s'étendant depuis les sources de réglage et de dépôt vers le contenant, en aval de la source de dépôt et en amont de la vanne multivoies de commutation et étant agencée pour diminuer, ou respectivement augmenter, la pression du gaz d'une source de dépôt jusqu'à une pression de dépôt intermédiaire (PD_{INT}) inférieure, ou respectivement supérieure, à la pression de source de cette source de dépôt et supérieure à la pression de réglage PM,
et dans lequel les moyens de commande sont agencés pour délivrer du gaz à la pression PD_{INT} dans une partie d'un circuit, constituant une source de dépôt, reliant ladite vanne de dépôt à ladite vanne multivoies de commutation.

De manière préférée, les moyens de commande peuvent comprendre deux vannes de dépôt ou plus.

Il est également proposé, selon un second aspect de l'invention, un procédé de dépôt mis en œuvre dans un système de dépôt, ledit système comprenant :
- un contenant dans lequel se trouve de la matière à déposer et comprenant une entrée et une sortie,
- un système pneumatique comprenant des moyens de commande du système pneumatique. Le procédé est caractérisé en ce que le système pneumatique injecte, par l'entrée, du gaz dans le contenant de sorte que ce gaz exerce, directement ou indirectement, une pression sur la matière à déposer, le procédé comprenant une commande, par les moyens de commande du système pneumatique :

- d'une injection, par l'entrée, de gaz à une pression de réglage (PM), de sorte qu'un ménisque convexe de matière à déposer fasse saillie du contenant au niveau de la sortie, puis
- d'au moins une injection, par l'entrée, de gaz respectivement à au moins une pression de dépôt (PD, PDᵢ) supérieure à la pression de réglage, de sorte que la matière à déposer s'écoule en un dépôt de matière hors du contenant par la sortie sur une surface de dépôt.

Le système de dépôt dans lequel le procédé est mis en œuvre, peut être le système de dépôt selon le premier aspect de l'invention.

Toute caractéristique du système de dépôt selon le premier aspect de l'invention peut être intégrée dans le système dépôt dans lequel le procédé est mis en œuvre.

Procédé selon le second aspect de l'invention, pouvant comprendre une commande, par les moyens de commande, de plusieurs injections, par l'entrée, de gaz à plusieurs pressions de dépôt PDᵢ différentes les unes des autres, de sorte que la matière à déposer s'écoule selon des vitesses différentes hors du contenant par la sortie, lesdites pressions de dépôt PDᵢ étant supérieures à la pression de réglage PM.

Les plusieurs injections, par l'entrée, de gaz à plusieurs pressions de dépôt PDᵢ différentes les unes des autres sont réalisées successivement les unes aux autres.

Procédé selon le second aspect de l'invention, pouvant comprendre :
- entre l'injection de gaz à la pression de réglage PM et l'au moins une injection de gaz à l'au moins une pression de dépôt (PD, PDᵢ), une diminution d'une distance entre le ménisque et la surface de dépôt jusqu'à formation d'un pont capillaire entre ladite surface de dépôt et le ménisque,
- subséquemment à la formation du pont capillaire, l'au moins une injection de gaz à l'au moins une pression de dépôt (PD, PDᵢ),
- subséquemment à l'au moins une injection de gaz à l'au moins une pression de dépôt (PD, PDᵢ), une nouvelle injection de gaz à la pression de réglage PM de sorte que la matière à déposer ne s'écoule plus du contenant,
- subséquemment à la nouvelle injection de gaz à la pression de réglage PM, une augmentation de la distance entre le ménisque et la surface de dépôt jusqu'à une rupture du pont capillaire entre la surface de dépôt et le ménisque.

Procédé selon le second aspect de l'invention, dans lequel le système pneumatique peut comprendre une source, dite de réglage, produisant du gaz à la pression de réglage PM et au moins une source, dite de dépôt, produisant du gaz à au moins une pression de source (PS, PSⱼ), ladite au moins une pression de source PS, PSⱼ étant, de préférence, au moins 1,01 fois, de préférence encore au moins 1,015 fois, supérieure à la pression de réglage PM.

Procédé selon un premier perfectionnement du second aspect de l'invention, dans lequel le système pneumatique comprend une seule source de dépôt.

Procédé selon le premier perfectionnement du second aspect de l'invention, dans lequel la pression de sources PS est supérieure à la pression de dépôt PD, ou à au moins une des pressions de dépôt PDᵢ.

Procédé selon le premier perfectionnement du second aspect de l'invention, dans lequel la pression de sources PS est inférieure à la pression de dépôt PD, ou à au moins une des pressions de dépôt PDᵢ.

Procédé selon le premier perfectionnement du second aspect de l'invention, dans lequel la pression de source PS est égale à la pression de dépôt PD, ou à une des pressions de dépôt PDᵢ.

Procédé selon le premier perfectionnement du second aspect de l'invention, dans lequel la pression PD, ou plusieurs des pressions PDᵢ, de gaz injecté dans le contenant est obtenue par :
- mélange de gaz provenant de la source de réglage et de gaz provenant de la source de dépôt, et/ou
- diminution ou augmentation de la pression de gaz provenant de la source de dépôt, et/ou
- augmentation de la pression de gaz provenant de la source de réglage.

Procédé selon un second perfectionnement du second aspect de l'invention, dans lequel le système pneumatique comprend plusieurs sources de dépôt, chacune desdites plusieurs sources de dépôt produisant du gaz à une pression de source PSⱼ différente de chacune des autres pressions de source PSⱼ des autres sources de dépôt.

Procédé selon le second perfectionnement du second aspect de l'invention, dans lequel chaque pression de source PSⱼ est égale à une pression de dépôt PDᵢ différente.

Procédé selon le second perfectionnement du second aspect de l'invention, dans lequel au moins une pression de source PSⱼ est supérieure à la pression de dépôt PD, ou à chaque pression de dépôt PDᵢ.

Procédé selon le second perfectionnement du second aspect de l'invention, dans lequel au moins une pression de source PSⱼ est inférieure à la pression de dépôt PD, ou à chaque pression de dépôt PDᵢ.

Procédé selon le second perfectionnement du second aspect de l'invention, dans lequel la pression de dépôt PD, ou plusieurs des pressions de dépôt PDᵢ, de gaz injecté dans le contenant est obtenue par :
- mélange de gaz provenant de la source de réglage et de gaz provenant d'au moins une des sources de dépôt, et/ou
- mélange de gaz provenant d'une source de dépôt et de gaz provenant d'au moins une autre des sources de dépôt, et/ou
- diminution ou augmentation de la pression de gaz provenant d'au moins une des sources de dépôt, et/ou
- augmentation de la pression de gaz provenant de la source de réglage.

Procédé selon le second aspect de l'invention, dans lequel la source de réglage et/ou chaque source de dépôt est un réservoir stockant du gaz à sa pression respective de réglage et/ou de source.

Procédé selon le second aspect de l'invention, dans lequel chaque réservoir considéré présente un volume au moins 5 fois, de préférence au moins 10 fois, supérieur à la somme du volume du contenant et du volume d'un circuit de gaz reliant ce réservoir considéré à l'entrée.

Procédé selon le second aspect de l'invention, peut comprendre une commutation, par une vanne multivoies, dite de commutation, des moyens de commande, d'une injection de gaz provenant d'une source de dépôt ou de réglage vers une injection de gaz provenant d'une autre source de dépôt ou de réglage de manière à opérer un changement instantané de pression dans le contenant, ladite vanne multivoies étant reliée :
- à l'entrée du contenant,
- à au moins une des sources,
- à un système de remise à l'air.

Compte tenu du fait que le réservoir présente un volume au moins 5 fois supérieur à la somme du volume du contenant et du volume d'un circuit de gaz reliant ce réservoir considéré à l'entrée, un changement instantané de pression dans le contenant est opéré lors d'une commutation, par la vanne multivoies de commutation, d'une injection de gaz provenant d'une source de dépôt ou de réglage vers une injection de gaz provenant d'une autre source de dépôt ou de réglage.

Procédé selon le second aspect de l'invention, dans lequel la pression de réglage PM et la pression de dépôt PD, ou chacune des pressions de dépôt PDᵢ, peuvent être inférieures ou égales à 200 kPa au-dessus de la pression atmosphérique.

Procédé selon le second aspect de l'invention, dans lequel la pression de réglage PM peut être inférieure à la pression atmosphérique.

Procédé selon le second aspect de l'invention, dans lequel la pression de réglage PM et une des pressions de dépôt PDᵢ sont inférieures à la pression atmosphérique, et une autre des pressions de dépôt est supérieure à la pression atmosphérique.

Procédé selon le second aspect de l'invention, dans lequel la pression de réglage PM et la pression de dépôt PD, ou chacune des pressions de dépôt PDᵢ, peuvent être inférieures à la pression atmosphérique.

Procédé selon le second aspect de l'invention, pouvant comprendre une commutation, par une vanne multivoies, dite de commutation, des moyens de commande, d'une injection de gaz provenant d'une source vers une injection de gaz provenant d'une autre source de manière à opérer un changement instantanée de pression dans le contenant, ladite vanne multivoies étant reliée :
- à l'entrée du contenant,
- à au moins une des sources,
- à un système de remise à l'air.

Procédé selon le second aspect de l'invention, pouvant comprendre :
- une mise en mouvement, par un système de mise en mouvement, du contenant relativement à la surface de dépôt, ou inversement, dans un plan parallèle à la surface de dépôt, dit plan xy, selon un trajet prédéterminé, et/ou
- un éloignement et/ou un rapprochement, par le système de mise en mouvement, du contenant relativement de la surface de dépôt, ou inversement.

Procédé selon le second aspect de l'invention, pouvant comprendre une commande, par une unité de traitement, d'une quantité de matière déposée sur la surface de dépôt en fonction d'une position relative du contenant par rapport à ladite surface en opérant :
- une modification et/ou une adaptation de la vitesse relative du contenant par rapport à la surface de dépôt, ou inversement, et/ou
- une modification et/ou une adaptation d'une distance entre la sortie du contenant et la surface de dépôt, et/ou
- une modification et/ou adaptation de la pression de dépôt PDᵢ sélectionnée.

Procédé de dépôt, selon le second aspect de l'invention, pouvant comprendre un contrôle de la quantité de matière déposée et/ou de la position relative du contenant par rapport à la surface de dépôt au moyen d'un ou plusieurs dispositifs d'imagerie optique imageant une zone de dépôt, et/ou une zone comprenant la sortie du contenant, et/ou au moins une partie de la surface de dépôt et, en fonction de ce contrôle, une modification et/ ou un ajustement :
- de la pression de gaz injecté dans le contenant, et/ou
- de la vitesse de déplacement relative du contenant par rapport à la surface de dépôt, ou inversement, et/ou
- de la distance entre la sortie et la surface de dépôt, et/ou
- de la position relative du contenant par rapport à la surface de dépôt.

Procédé de dépôt selon le second aspect de l'invention, pouvant comprendre une mesure, par un capteur de distance et préalablement au dépôt de la matière à déposer, d'une topographie de la surface de dépôt le long du trajet prédéterminé selon lequel sera déposée la matière à déposer de sorte à, lors du dépôt, maintenir constante une distance entre la sortie du contenant et la surface de dépôt lors du déplacement du contenant selon le trajet prédéterminé.

Procédé de dépôt selon le second aspect de l'invention, pouvant comprendre les étapes consistant à :
- diminuer, ou respectivement augmenter, par une vanne multivoies de régulation de pression des moyens de commande, dite vanne de dépôt, la pression du gaz d'une source de dépôt jusqu'à une pression de dépôt intermédiaire (PD_{INT}) inférieure, ou respectivement supérieure, à la pression de source de cette source de dépôt et supérieure à la pression PM, et
- délivrer, par les moyens de commande, du gaz à la pression PD_{INT} dans une partie d'un circuit, constituant une source de dépôt, reliant ladite vanne de dépôt à la vanne multivoies de commutation ;
ladite vanne de dépôt, étant située, par rapport à un chemin de gaz s'étendant depuis les sources de réglage et de dépôt vers le contenant, en aval de la source de dépôt et en amont de ladite vanne multivoies de commutation.

Procédé selon le second aspect de l'invention, dans lequel l'application de la pression exercée par le gaz sur la matière à déposer peut être indirecte, ladite application de la pression étant exercée sur un élément apte à coulisser dans le contenant et disposé au contact de la matière à déposer.

Procédé selon le second aspect de l'invention, pouvant comprendre une réticulation de la matière déposée sur la surface de dépôt, et/ou une désinfection de la surface de dépôt au moyen d'un émetteur lumineux, l'émetteur lumineux émettant de préférence des photons de longueur d'onde comprise entre 150 et 600 nm.

Procédé selon le second aspect de l'invention pouvant comprendre :
- une gravure du dépôt de matière et/ou de la surface de dépôt et/ou d'une pièce comprenant la surface de dépôt, et/ou
- une découpe du dépôt de matière et/ou de la surface de dépôt et/ou d'une pièce comprenant la surface de dépôt, et/ou
- un recuit du dépôt.

Procédé selon le second aspect de l'invention, dans lequel la sortie peut être située dans une enceinte refermant une atmosphère, ledit procédé comprenant en outre un contrôle de l'atmosphère de dépôt comprenant :
- une filtration de l'atmosphère de sorte à contrôler une concentration de particules dans l'atmosphère introduit dans l'enceinte, et/ou
- une stérilisation de l'atmosphère et/ou de la zone de dépôt et/ou du contenant et/ou de la matière à déposer, et/ou
- une modification d'un taux d'hygrométrie de l'atmosphère, et/ou
- une modification d'une température de dépôt.

Procédé selon le second aspect de l'invention, pouvant comprendre une mesure d'une pression dans une partie d'un circuit de gaz reliant la vanne multivoies à l'entrée.

Procédé selon le second aspect de l'invention, pouvant comprendre une étape de chauffage de la matière à déposer de sorte à mettre en œuvre une extrusion de la matière contenue dans le contenant.

Procédé selon le second aspect de l'invention, pouvant comprendre une mise en œuvre d'une fabrication additive à partir de fichier(s) numérique(s).

Procédé selon le second aspect de l'invention, pouvant comprendre une régulation d'une température de la surface de dépôt.

Procédé selon le second aspect de l'invention, pouvant comprendre une étape de nettoyage de tout ou partie du contenant.

Procédé selon le second aspect de l'invention, pouvant comprendre un calcul des pressions de réglage PM et de la pression de dépôt PD ou des pressions de dépôt PDᵢ en fonction de paramètres physico-chimiques de la matière à déposer formant le ménisque. Les caractéristiques du dépôt sont fonction de ces paramètres et de paramètres physico-chimiques de la surface.

Le dispositif de dépôt selon le premier aspect de l'invention peut être agencé pour mettre en œuvre le procédé selon le second aspect de l'invention.

Le procédé selon le second aspect de l'invention peut être mise en œuvre par le système de dépôt selon le premier aspect de l'invention.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
- les FIGURES 1 et 2 sont des représentations schématiques du contenant,
- la FIGURE 3 est une représentation schématique du système de dépôt selon l'invention,
- la FIGURE 4 est une représentation schématique de dépôt de points et/ou de motifs par formation d'un pont capillaire formation entre le contenant et la surface de dépôt,
- la FIGURE 5 est une représentation schématique de dépôt de points et/ou de motifs sans formation d'un pont capillaire entre le contenant et la surface de dépôt.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Les caractéristiques décrites dans les modes de réalisation décrits ci-après sont compatibles et peuvent être combinées et/ou associées avec des caractéristiques quelconques du premier mode de réalisation du système de dépôt 1 et avec l'une quelconque des alternatives du premier mode prévues.

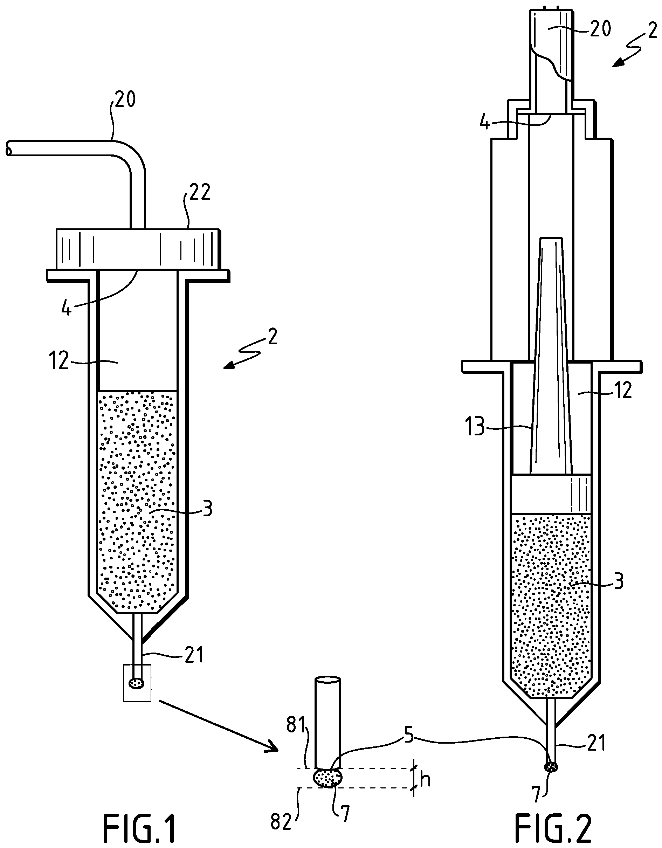

En référence aux FIGURES 1, 2, 3, 4 et 5 il est décrit, dans un premier mode de réalisation, un système de dépôt 1 comprenant un contenant 2 agencé pour contenir de la matière à déposer 3, le contenant 2 comprenant une entrée 4 et une sortie 5. Le système de dépôt 1 comprend également un système pneumatique 6 agencé pour injecter, par l'entrée 4, du gaz dans le contenant 2 de sorte que ce gaz exerce, directement ou indirectement, une pression sur la matière à déposer 3. Le système de dépôt 1 comprend des moyens de commande 611, 612, 613, 614, 615 du système pneumatique 6 agencés pour commander au moins une injection, par l'entrée 4, de gaz à une pression de réglage PM, de sorte qu'un ménisque convexe 7 de matière à déposer 3 fasse saillie du contenant 2 au niveau de la sortie 5.

A ce stade, le ménisque 7 est maintenu formé de manière stable. Une hauteur h du ménisque convexe 7 est comprise entre 0 et d/2. La hauteur h du ménisque convexe 7 est adaptée en fonction de la viscosité de la matière à déposer 3, d'une vitesse de déplacement du contenant 2 par rapport à la surface de dépôt 23 et du procédé de dépôt utilisé. La hauteur du ménisque convexe 7 correspondant à la distance séparant un plan 81 comprenant un orifice (non représenté) de sortie 5 de la matière à déposer 3 et un plan 82 comprenant une extrémité du ménisque convexe 7 située du côté de la surface de dépôt 23 ; d est le diamètre de féret maximal interne de l'orifice de sortie 5.

Les moyens de commande 611, 612, 613, 614, 615 du système pneumatique 6 sont commandés par au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

Les moyens de commande 611, 612, 613, 614, 615 du système pneumatique 6 sont également agencés pour commander une injection ou plusieurs injections, par l'entrée 4, de gaz à respectivement une pression de dépôt PD ou plusieurs pressions de dépôt PDᵢ supérieures à la pression de réglage PM, de sorte que la matière à déposer 3 s'écoule hors du contenant 2 par la sortie 5.

Le système de dépôt 1 convient à tout type de fabrication additive.

Le système de dépôt 1 permet de déposer de la matière solide à extruder, de la matière liquide à forte viscosité, c'est-à-dire une viscosité comprise entre 200 et 10000 centipoises, et de la matière liquide à faible viscosité, c'est-à-dire une viscosité comprise entre 0,1 et 200 centipoises, sans avoir à adapter, ni le système de dépôt 1, ni la formulation ou la composition de la matière à déposer 3.

Le système de dépôt 1 permet le dépôt sans contact de matière à déposer 3. Parmi les procédés de dépôt sans contact, le système de dépôt 1 convient, par exemple, au dépôt de matière sous forme de goutte (procédés de type drop casting ou jet d'encre), au procédé de dépôt de matière sous forme de motifs (lignes, films...) (procédés de type meniscus coating, jet d'encre ou encore de type extrusion). Le système de dépôt 1 permet donc de déposer de la matière à déposer 3 sur tout type de substrat 27 présentant tout type de rugosité.

Il est entendu par « dépôt sans contact » dans la présente description, l'absence de contact entre le contenant 2, et en particulier la sortie 5 du contenant 2, et la surface de dépôt 23 du substrat 27. Néanmoins, il est bon de noter que dans l'état de l'art, un dépôt en (i) l'absence de contact entre le contenant 2 et la surface de dépôt 23 du substrat 27 peut être considéré comme « dépôt avec contact », c'est par exemple le cas pour la technique de mensiscus coating, alors que, par exemple pour la technique de spotter array, (ii) un dépôt avec contact entre le contenant 2 et la surface de dépôt 23 du substrat 27, peut être considéré comme « dépôt sans contact ».

Dans certains cas, la matière à déposer 3 contenue dans le ménisque 7 est dans un état différent de la matière à déposer 3 contenue dans le contenant 2. C'est par exemple le cas lorsque la matière à déposer 3 est extrudée. Dans ce cas, la matière 3 contenue dans le contenant 2 peut être solide ou pâteuse.

La matière à déposer 3 s'écoule du contenant 2 selon un flux, ou de manière équivalente selon un débit souhaité, de sorte à former un dépôt de matière conforme au dépôt souhaité.

Il est entendu par système de dépôt 1, un système de fabrication additive 1.

Lorsque les moyens de commande 611, 612, 613, 614, 615 du système pneumatique 6 sont agencés pour commander plusieurs injections, le gaz est injecté, par l'entrée 4 du contenant 2, à plusieurs pressions de dépôt PDᵢ différentes les unes des autres de sorte que la matière à déposer 3 s'écoule selon des vitesses différentes hors du contenant 2 par la sortie 5. Les pressions de dépôt PDᵢ sont supérieures à la pression de réglage PM. Les injections de gaz dans le contenant 2 sont réalisées successivement.

Cela permet de déposer des quantités de matière à déposer 3, c'est-à-dire des épaisseurs de matière déposée pouvant varier de quelques nanomètres à plusieurs microns et/ou des largeurs de matière déposée pouvant varier de quelques dizaines de nanomètres à quelques millimètres. Cela permet également de modifier la quantité de matière déposée, afin de modifier par exemple la forme et/ou une dimension du motif déposé, en cours de dépôt lors d'un même passage.

Les moyens de commande 611, 612, 613, 614, 615 du système pneumatique 6 sont agencés de sorte à modifier, en particulier durant le dépôt de matière à déposer 3, la vitesse d'écoulement de la matière à déposer 3 hors du contenant 2. Ainsi, les moyens de commande 611, 612, 613, 614, 615 du système pneumatique 6 sont agencés de sorte qu'une injection d'un gaz à une pression de dépôt PDₐ entraine un écoulement d'une quantité de matière à déposer 3, hors du contenant 2, à une vitesse d'écoulement Vₐ. La vitesse d'écoulement Vₐ est différente d'une vitesse d'écoulement V_{b} de matière à déposer 3, hors du contenant 2, pour laquelle une injection d'un gaz, dans le contenant 2, à une pression de dépôt PD_{b} est réalisée. De manière équivalente à une modification de la vitesse d'écoulement, les moyens de commande 611, 612, 613, 614, 615 du système pneumatique 6 peuvent être agencés de sorte à modifier un flux et/ou un débit de matière à déposer 3, ou respectivement des flux et/ou des débits de matière à déposer 3.

Une augmentation de la vitesse d'écoulement de matière à déposer 3 ou du flux de matière à déposer 3 ou du débit de matière à déposer 3 entraine une augmentation d'une épaisseur et/ou d'une largeur du dépôt.

Dans le cas des systèmes de dépôt existants, il est réalisé un dépôt d'une quantité donnée de matière limitée à un choix au sein d'une gamme de quantité de matière prédéfinie et limitée. Le système de dépôt 1 selon l'invention permet à la matière à déposer 3 de s'écouler de manière continue, c'est-à-dire sans discontinuer, sans interruption tant que le contenant 2 contient de la matière à déposer 3 et tant qu'une pression de dépôt PD, PDᵢ est appliquée.

Le système pneumatique 6 du système de dépôt 1 comprend une source R, dite de réglage, agencée pour produire du gaz à la pression de réglage PM et comprend une source P1 ou plusieurs sources Pᵢ, dite de dépôt, agencées pour produire du gaz à une pression de source PS ou à plusieurs pressions de sources PSⱼ. La pression de source PS ou les pressions de sources PSⱼ sont au moins 1,01 fois, voire au moins 1,015 fois, supérieures à la pression de réglage PM. Ces valeurs correspondent au dépôt de matière à déposer 3 présentant une faible viscosité (0,1 et 1000 centipoises). Cette valeur augmente lorsque la viscosité de la matière à déposer 3 augmente. Lorsque la viscosité de la matière à déposer 3 est élevée (200 et 10000 centipoises), la pression de source PS ou les pressions de sources PSⱼ sont, à titre d'exemple non limitatif, au moins 5 fois, voire au moins 10 fois, supérieures à la pression de réglage PM. Lorsqu'il s'agit de dépôt par extrusion, la pression de source PS ou les pressions de sources PSⱼ sont, à titre d'exemple non limitatif, au moins 10 fois, voire au moins 100 fois, supérieures à la pression de réglage PM.

Une source P1, Pᵢ, R peut être comprise comme étant un contenant 9 comprenant du gaz à une pression donnée. Une source P1, Pᵢ, R peut être comprise comme étant une pompe 14 agencée pour compresser du gaz ou pour aspirer du gaz. Une source P1, Pᵢ, R peut être comprise comme étant un conduit 10, 11, 20, 25, 26 comprenant du gaz à une pression donnée. Une source P1, Pᵢ, R peut être comprise comme étant un ensemble comprenant, entre autre, un contenant 9, une pompe 14, un conduit 10, 11, 20, 25, 26 un système de remise à l'air 171, 172, 18. La pompe 14 est une pompe à membrane.

Ainsi, selon l'application visée, chaque source P1, Pᵢ, R du système de dépôt 1 est agencée pour modifier à tout instant et/ou en temps réel et/ou en cours de dépôt, sa ou ses pressions de source PS, PSⱼ et/ou sa pression de réglage PM au moyen de la pompe 14.

Par exemple, la source de réglage R dont le gaz quelle contient présente une pression de réglage PM peut voir la pression de son gaz modifiée :
- à une pression de source PS, PSⱼ, et par conséquent devenir, de manière temporaire ou définitive, une source de dépôt P1, Pᵢ, ou
- à une nouvelle pression de réglage différente de la pression de réglage PM avant modification.

De manière alternative ou complémentaire, la pression de source PS du gaz contenu dans une source de dépôt P1 ou des pressions de sources PS, PSⱼ contenues dans des sources de dépôt P1, Pi, peuvent voir la, une, des ou les pressions de leurs gaz modifiées :
- à la pression de réglage PM ou à une nouvelle pression de réglage différente de la pression de réglage PM de la source de réglage R avant modification,
- à une nouvelle pression de source ou à des pressions de sources étant en partie identiques ou chacune différente des pressions de sources PS, PSⱼ avant modifications.

Au vu des matières à déposer 3 généralement utilisée, la pression de réglage PM et la pression de dépôt PD, ou chacune des pressions de dépôt PDᵢ, sont inférieures ou égales à 200 kPa au-dessus de la pression atmosphérique.

Dans l'ensemble de la présente description, les pressions sont définies de manière relative. En pratique, les systèmes de mesure de pression (15, 19) du système de dépôt 1 ont pour référence la pression atmosphérique. Ainsi, les valeurs de pressions, et en particulier la valeur de pression (PM, PD, PDᵢ) du gaz injecté dans le contenant 2, sont définies par rapport à la pression atmosphérique.

Ainsi, dès lors que la pression atmosphérique est connue, l'ensemble des pressions peuvent être définies de manière absolue (dans le sens non relatif). Par exemple, pour une pression atmosphérique de 100 kPa, lorsqu'un gaz est injecté dans le contenant 2 à une pression de dépôt (PD, PDᵢ), ou de réglage PM, relative de 100 kPa au-dessus de la pression atmosphérique, le gaz injecté dans le contenant 2 présente donc une pression de dépôt (PD, PDᵢ), ou de réglage PM, absolue de 200 kPa.

Lorsque la matière à déposer 3 est très peu visqueuse (entre 0,1 et 1000 centipoises), la pression de réglage PM peut être inférieure à la pression atmosphérique de sorte que la matière à déposer 3, présentant une viscosité telle qu'elle devrait s'écouler, hors du contenant 2, si la pression PM était égale ou supérieure à la pression atmosphérique, forme le ménisque convexe 7 et ne s'écoule pas. Dans certains cas, seule la pression de réglage PM est inférieure à la pression atmosphérique. Dans d'autres cas, la pression de réglage PM et la pression de dépôt PD, ou chacune des pressions de dépôt PDᵢ, sont inférieures à la pression atmosphérique.

En pratique, pour une matière à déposer 3 dont la viscosité est comprise entre 0,1 à 1000 centipoises, la pression de dépôt PD, ou chacune des pressions de dépôt PDᵢ, sont, en règle générale, comprise entre 10 kPa en dessous de la pression atmosphérique et 200 kPa au-dessus de la pression atmosphérique. Cette pression est fonction de la vitesse de déplacement du contenant 2.

L'homme du métier comprendra que lorsque la pression de dépôt PD, ou la pression de réglage PM, est inférieure à la pression atmosphérique, le volume 12 du contenant 2 dans lequel est injecté le gaz provenant de la source de réglage R et/ou de la source P1 ou des sources Pᵢ de dépôt est sous vide partiel. C'est à dire que lorsque la pression de dépôt PD, ou la pression de réglage PM, est inférieure à la pression atmosphérique, le gaz injecté dans le contenant 2, depuis la source de réglage R et/ou la source P1 ou les sources de dépôt Pᵢ, exerce une force visant à s'opposer à l'effet de la pesanteur sur la matière à déposer 3 de sorte qu'elle ne s'écoule pas hors du contenant 2. De manière équivalente, l'homme du métier comprendra que lorsque la pression de dépôt PD, ou la pression de réglage PM, est inférieure à la pression atmosphérique, le volume 12 du contenant 2 dans lequel est injecté le gaz provenant de la source de réglage R et/ou de la source P1 ou des sources Pᵢ de dépôt crée une dépression dans le contenant 2 visant à contrebalancer l'effet de la pesanteur sur la matière à déposer 3 de sorte qu'elle ne s'écoule pas hors du contenant 2.

A titre d'exemple, pour un diamètre d'un orifice de sortie 5 du contenant 2 de 100 µm et lorsque la matière à déposer 3 sera liquide et présente des viscosités supérieures à 5000 centipoises ou lorsque la matière à déposer 3 sera une pâte ou lorsque la matière à déposer 3 sera une matière solide à extruder, la pression de dépôt PD ou des pressions de dépôt PDᵢ sont supérieures à la pression atmosphérique.

A l'inverse, pour un diamètre de l'orifice de sortie 5 du contenant 2 de 100µm et lorsque la matière à déposer 3 sera liquide et présente des viscosités inférieures à 1000 centipoises, la pression de dépôt PD ou des pressions de dépôt PDᵢ sont inférieures à la pression atmosphérique.

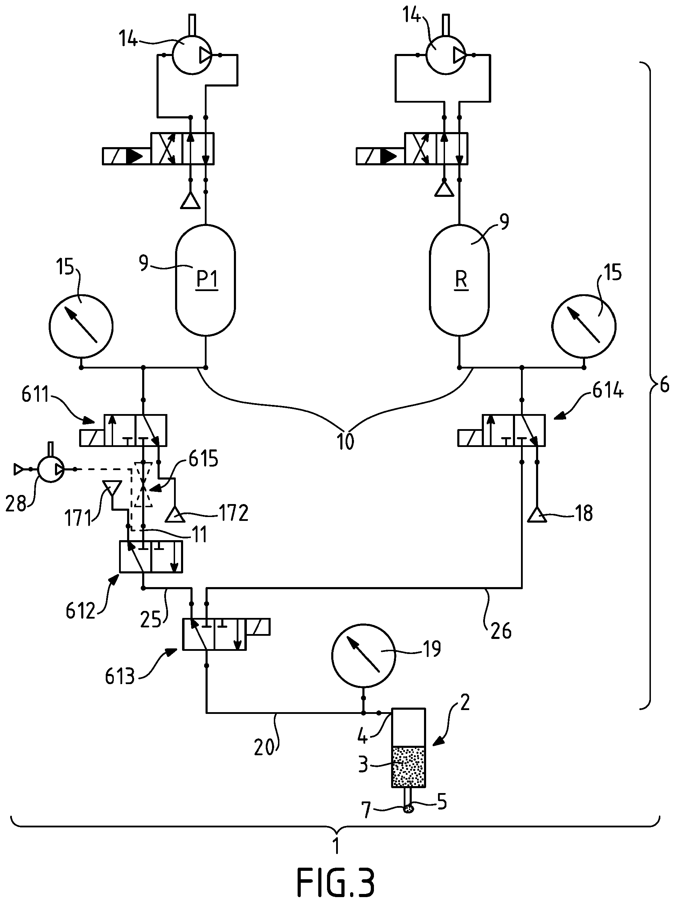

Selon une première alternative du premier mode de réalisation du système de dépôt 1 telle qu'illustrée sur la FIGURE 3, le système pneumatique 6 comprend une seule source P1 de dépôt.

Selon la première alternative du premier mode de réalisation :
- la pression de sources PS et la pression de réglage PM sont supérieures à la pression atmosphérique, ou
- la pression de sources PS et la pression de réglage PM sont inférieures à la pression atmosphérique, ou
- la pression de sources PS est supérieure à la pression atmosphérique et la pression de réglage PM est inférieure à la pression atmosphérique.

Selon la première alternative du premier mode de réalisation, et lorsque la pression de dépôt PD ou des pressions de dépôt PDᵢ sont supérieures à la pression atmosphérique, la pression de source PS est supérieure à la pression de dépôt PD ou à au moins une des pressions de dépôt PDᵢ. Dans ce cas particulier, la source P1 contenant du gaz à la pression de source PS est considéré comme étant la seule source P1 de dépôt et une pompe 28 peut être branchée au circuit de gaz, de manière à comprimer du gaz dans un circuit de gaz situé en aval de la source P1 et amont de l'entrée 4 du contenant 2 par rapport au chemin de gaz s'étendant depuis les sources de réglage R et de dépôt P1 vers le contenant 2. Dans ce cas, la pompe 28 peut être branchée, par exemple, au niveau du circuit de gaz 11.

De manière préférée, lorsque la pression de dépôt PD ou des pressions de dépôt PDᵢ sont supérieures à la pression atmosphérique, la pression de source PS est supérieure à la pression de dépôt PD ou à chaque pression de dépôt PDᵢ.

De manière d'avantage préférée, lorsque la pression de dépôt PD ou des pressions de dépôt PDᵢ sont supérieures à la pression atmosphérique, la pression de source PS est supérieure ou égale à une pression de dépôt PDₛᵤₚ qui est supérieure à toutes les autres pressions de dépôt PDᵢ.

Selon la première alternative du premier mode de réalisation, et lorsque la pression de dépôt PD ou des pressions de dépôt PDᵢ sont inférieures à la pression atmosphérique, la pression de source PS est inférieure à la pression de dépôt PD ou à au moins une des pressions de dépôt PDᵢ. Dans ce cas particulier, la source P1 contenant du gaz à la pression de source PS est considéré comme étant la seule source P1 de dépôt et une pompe 28 peut être branchée au circuit de gaz, de manière à comprimer du gaz dans un circuit de gaz situé en aval de la source P1 et amont de l'entrée 4 du contenant 2 par rapport au chemin de gaz s'étendant depuis les sources de réglage R et de dépôt P1 vers le contenant 2. Dans ce cas, la pompe 28 peut être branchée, par exemple, au niveau du circuit de gaz 11.

De manière préférée, lorsque la pression de dépôt PD ou des pressions de dépôt PDᵢ sont inférieures à la pression atmosphérique, la pression de source PS est inférieure à la pression de dépôt PD ou à chaque pression de dépôt PDᵢ.

De manière d'avantage préférée, lorsque la pression de dépôt PD ou des pressions de dépôt PDᵢ sont inférieures à la pression atmosphérique, la pression de source PS est inférieure ou égale à une pression de dépôt PD_{inf} qui est inférieure à toutes les autres pressions de dépôt PDᵢ.

De manière préférée, selon la première alternative du premier mode de réalisation, la pression de source PS est supérieure ou égale à une pression de dépôt PDₛᵤₚ qui est supérieure à toutes les autres pressions de dépôt PDᵢ et la pression de réglage PM est inférieure à une pression de dépôt PD_{inf} qui est inférieure à toutes les autres pressions de dépôt PDᵢ.

Selon la première alternative du premier mode de réalisation, la pression de source PS est égale à la pression de dépôt PD, ou à une des pressions de dépôt PDᵢ.

Selon la première alternative du premier mode de réalisation, le système pneumatique 6 est agencé de sorte que la pression de dépôt PD, ou plusieurs des pressions de dépôt PDᵢ, de gaz injecté dans le contenant est obtenue par diminution ou augmentation de la pression de gaz provenant de la source de dépôt P1.

A titre d'exemple non limitatif et en référence à la première alternative du premier mode de réalisation du système de dépôt 1, tel que présenté sur la FIGURE 3, il est décrit, à titre d'exemple non limitatif, un agencement des moyens de commande 611, 612, 613, 614, 615 permettant le mélange de gaz, ainsi que la diminution et l'augmentation de la pression de gaz.

A cet effet, les moyens de commande 611, 612, 613, 614, 615 du système de dépôt 1 comprennent une vanne multivoies de régulation de pression, dite vanne de dépôt, 615 permettant d'augmenter ou de diminuer la pression de gaz provenant de la source P1. Cette vanne de dépôt 615 est située, par rapport à un chemin de gaz s'étendant depuis les sources de réglage R et de dépôt P1 vers le contenant 2, en aval de la source de dépôt P1 et en amont d'une vanne multivoies, dite de commutation, 613. Cette vanne de dépôt 615 est agencée pour :
- lorsque la pression de source PS est supérieure à la pression atmosphérique, diminuer la pression du gaz PS de la source de dépôt P1 jusqu'à une pression de dépôt intermédiaire (PD_{INT}) inférieure à la pression de source PS et supérieure à la pression de réglage PM (dans ce cas, la pression de source PS est supérieure à la pression de dépôt PD ou à chaque pressions de dépôt PDᵢ), ou
- lorsque la pression de source PS est inférieure à la pression atmosphérique, augmenter la pression du gaz PS de la source de dépôt P1 jusqu'à une pression de dépôt intermédiaire (PD_{INT}) supérieure à la pression de source P1 et supérieure à la pression de réglage PM (dans ce cas, la pression de source PS est inférieure à la pression de dépôt PD, ou à au moins une des pressions de dépôt PDᵢ ou à chaque pression de dépôt PDi). Les moyens de commande 611, 612, 613, 614, 615 sont agencés pour délivrer du gaz à la pression PD_{INT} dans une partie d'un circuit 11, constituant une source de dépôt reliant la vanne de dépôt 615 à une vanne multivoies de commutation supplémentaire 612.

Selon le premier mode de réalisation du système de dépôt 1, les moyens de commande 611, 612, 613, 614, 615 du système de dépôt 1 comprennent une vanne multivoies, dite de commutation, 613 reliée :
- à l'entrée 4 du contenant 2,
- à au moins une des sources de dépôt P1, Pᵢ et à la source de réglage R,
- à un système de remise à l'air 171.

La vanne multivoies 613 est agencée pour commuter d'une injection de gaz provenant d'une source de dépôt P1, Pi ou de réglage R vers une injection de gaz provenant d'une autre source de dépôt P1, Pi ou de réglage R, ou inversement, de manière à opérer un changement instantané de pression dans le contenant 2.

Il est entendu par instantané, un changement de pression tel que :
- la variation d'épaisseur et/ou de largeur du dépôt est nette, c'est-à-dire qu'elle ne présente pas de gradient d'épaisseur et/ou de largeur, lorsque la vanne de commutation 613 opère une commutation depuis une pression de dépôt PD, PDᵢ vers une autre pression PDᵢ,
- un arrêt net et précis du dépôt et l'obtention d'une hauteur h, souhaitée et fixe, du ménisque convexe 7 lorsque la vanne de commutation 613 opère une commutation depuis une pression de dépôt PD, PDᵢ vers la pression de réglage PM,
- un démarrage, ou une reprise ou une projection, net et précis du dépôt lorsque la vanne de commutation 613 opère une commutation depuis la pression de réglage PM vers une pression de dépôt PD, PDᵢ.

Selon la première alternative du premier mode de réalisation du système de dépôt 1, la vanne de commutation 613 est reliée à un système de mise à l'air 171 via la vanne multivoies de commutation supplémentaire 612.

Une vanne multivoies de commutation supplémentaire 614 est située entre la source de réglage R et la vanne de commutation 613. Cette vanne multivoies 614 permet, entre autre, d'injecter de l'air à pression atmosphérique depuis un système de remise à l'air 18 relié à la vanne multivoies 614, ou faisant partie de la vanne multivoies 614, dans un circuit de gaz 10 reliant la source de réglage R à la vanne de commutation supplémentaire 614 ; et permet donc la remise à l'air de la source de réglage R.

La vanne multivoies de commutation supplémentaire 614 permet également d'injecter dans un circuit de gaz 26, du gaz à la pression de réglage PM.

La vanne multivoies de commutation supplémentaire 612 est située entre la source de dépôt P1 et la vanne de commutation 613, et en particulier entre la vanne de dépôt 615 et la vanne de commutation 613. Cette vanne multivoies 612 permet, entre autre, d'injecter de l'air à pression atmosphérique depuis un système de remise à l'air 171 relié à la vanne multivoies 612, ou faisant partie de la vanne multivoies 612, dans un circuit de gaz 25 reliant la vanne de commutation supplémentaire 612 à la vanne de commutation 613 ; et permet donc la remise à l'air du contenant 2.

La vanne multivoies de commutation supplémentaire 612 permet également d'injecter dans le circuit de gaz 25 du gaz à la pression de source PS, à la pression de dépôt PD ou à une pression de dépôt intermédiaire (PD_{INT}).

Une vanne multivoies de commutation supplémentaire 611 est située entre la source de dépôt P1 et la vanne de commutation 613, et en particulier entre la source de dépôt P1 et la vanne de dépôt 615. Cette vanne de commutation supplémentaire 611 permet, entre autre, d'injecter de l'air à pression atmosphérique depuis un système de remise à l'air 172 relié à la vanne multivoies 611, ou faisant partie de la vanne multivoies 611, dans un circuit de gaz 10 reliant la source de dépôt P1, Pᵢ à la vanne de multivoies 611 ; et par permet donc la remise à l'air de la source de dépôt P1.

La vanne multivoies de commutation supplémentaire 611 permet également d'injecter dans le circuit de gaz 11 du gaz à la pression de source PS, à la pression de dépôt PD ou à une pression de dépôt intermédiaire (PD_{INT}).

Selon la première alternative du premier mode de réalisation du système de dépôt 1, lorsque le gaz injecté dans le contenant 2, par l'entrée 4, est à la pression de réglage PM, autrement dit que la vanne de commutation 613 relie le circuit de gaz 26 au circuit de gaz 20, une commutation, par la vanne de commutation 613, depuis une injection de gaz provenant du circuit de gaz 26 vers une injection de gaz provenant du circuit de gaz 25 permettra :
- d'injecter, par l'entrée 4, dans le contenant 2, du gaz à la pression atmosphérique, ou
- d'injecter, par l'entrée 4, dans le contenant 2, du gaz à une pression de dépôt PD_{INT}, ou
- d'injecter, par l'entrée 4, dans le contenant 2, du gaz à la pression de source PS.

Selon la première alternative du premier mode de réalisation du système de dépôt 1, lorsque le gaz injecté dans le contenant 2, par l'entrée 4, est à la pression PD_{INT}, à la pression de source PS ou à la pression atmosphérique, autrement dit que la vanne de commutation 613 relie circuit de gaz 25 au circuit de gaz 20, une commutation, par la vanne de commutation 613, d'une injection de gaz provenant du circuit de gaz 25 vers une injection de gaz provenant du circuit de gaz 26 permettra d'injecter, par l'entrée 4, dans le contenant 2, du gaz à la pression de réglage PM.

Une vanne multivoies peut être tout type de vanne connu de l'homme du métier, tel que par exemple tout type de vanne commandée de type électrovanne.

Selon le premier mode de réalisation du système de dépôt 1, la source de réglage R et/ou chaque source de dépôt P1, Pᵢ est un réservoir 9 stockant du gaz à sa pression respective de réglage PM et/ou de source PD, PDᵢ. Le réservoir est une bombonne en aluminium ayant un volume intérieur de l'ordre du litre, par exemple 0,7 litre.

Chaque réservoir 9 considéré présente un volume au moins 5 fois supérieur à la somme du volume du contenant 2 et du volume d'un circuit 10, 11, 20, 25, 26 de gaz reliant ce réservoir 9 considéré à l'entrée 4. Dans ce cas, les variations du volume de gaz dans le réservoir 9 sont négligeables par rapport aux variations de volumes de gaz contenu dans le contenant 2 et dans le circuit 10, 11, 20, 25, 26 de gaz reliant ce réservoir 9 considéré à l'entrée 4. Cela a pour effet de maintenir constante la pression exercée par le gaz injecté dans le contenant 2 sur la matière à déposer 3 contenue dans le contenant 2 quel que soit le volume de matière à déposer 3 contenue dans le contenant 2, et/ou lorsque le volume de matière à déposer 3 contenue dans le contenant 2 varie. Cette caractéristique permet d'améliorer la qualité du dépôt, en particulier lors du démarrage, de la reprise, de la projection et de l'arrêt du dépôt. Cette caractéristique permet également d'obtenir un dépôt de matière homogène et constant indépendamment de la quantité de matière à déposer 3 restante dans le contenant 2.

En référence à la FIGURE 3, chaque réservoir 9 du système pneumatique 6 est relié à :
- des pompes 14 agencées pour pomper (ou aspirer) un gaz depuis chaque réservoir 9, P1, Pᵢ, R et/ou comprimer un gaz dans chaque réservoir 9, P1, Pᵢ, R,
- un système de mesure de pression 15.

Le système de mesure de pression utilisé est de préférence une jauge piezorésistive.

Le fait de pomper (ou aspirer) un gaz signifie que une pompe 14 est agencée de sorte à créer un vide partiel dans le réservoir 9, P1, Pi, R.

Les effets combinés de :
- la vanne de commutation 613, qui est agencée pour commuter d'une injection de gaz provenant d'une source de dépôt P1, Pi ou de réglage R vers une injection de gaz provenant d'une autre source de dépôt P1, Pi ou de réglage R, et
- du volume du réservoir 9, qui présente un volume au moins 5 fois supérieur à la somme du volume du contenant 2 et du volume d'un circuit de gaz 10, 11, 20, 25, 26 reliant ce réservoir 9 considéré à l'entrée 4 ; améliore le caractère instantané du changement de pression dans le contenant 2.

Etant donné que les réservoirs 9, P1, Pᵢ et 9, R présentent un volume au moins 5 fois supérieur à la somme du volume du contenant 2 et du volume du circuit 10, 11, 20, 25, 26 de gaz reliant chacun de ces réservoirs 9, P1, Pᵢ et R à l'entrée 4, le passage :
- depuis une pression de dépôt PD, PDᵢ vers la pression de réglage PM dans le contenant 2, engendre un arrêt net et précis du dépôt, et
- depuis la pression de réglage PM vers une pression de dépôt PD, PDᵢ un démarrage, ou une reprise, net et précis du dépôt,
- depuis une pression de dépôt PD, PDᵢ vers une autre des pressions de dépôt PDᵢ, engendre une variation d'épaisseur et/ou de largeur nette, c'est-à-dire ne présentant pas de gradient.

Le système de dépôt 1 comprend un système de mise en mouvement (non représenté) agencé pour mettre en mouvement le contenant 2 relativement à une surface de dépôt 23, ou inversement, dans un plan parallèle à la surface de dépôt 23, dit plan xy, selon un trajet prédéterminé. Le système de mise en mouvement éloigne et/ou rapproche le contenant 2 relativement de la surface de dépôt 23, ou inversement. Le système de mise en mouvement peut être tout type de système connu de l'homme du métier tel que, à titre d'exemple non limitatif, un bras articulé, une plateforme d'inclinaison, un moteur pas à pas, un système de guidage sur rail, un système de positionnement 3 axes.

Le système de dépôt 1 comprend une unité de traitement programmée et/ou configurée pour commander une quantité de matière déposée sur la surface de dépôt 23 en fonction d'une position relative du contenant 2 par rapport à ladite surface 23 en opérant de manière combinée ou séparée :
- une modification et/ou une adaptation de la vitesse relative du contenant 2 par rapport à la surface de dépôt 23, ou inversement,
- une modification et/ou une adaptation d'une distance entre la sortie 5 du contenant 2 et la surface de dépôt 23,
- une modification et/ou une adaptation de la pression de dépôt PD, PDᵢ sélectionnée.

L'homme du métier comprendra que la vitesse d'écoulement de la matière à déposer 3 ou le flux de matière à déposer 3 ou le débit de matière à déposer 3 entraine une augmentation de l'épaisseur et/ou de la largeur du dépôt pour une vitesse de déplacement du contenant 2 donnée.

La vitesse d'écoulement de la matière à déposer 3 varie en fonction :
- de la vitesse déplacement du contenant 2, et/ou
- du type de matière à déposer 3, et/ou
- la distance entre la sortie 5 du contenant 2 et la surface de dépôt 23, et/ou
- de la pression de dépôt PD, PDᵢ.

L'ensemble des aspects, décrits ci-dessus, liés au système de mise en mouvement permettent de procéder, avec un même système de dépôt, au dépôt de matière sous forme de matrice de points et sous forme de motifs.

L'unité de traitement comprend au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

L'unité de traitement est programmée et/ou configurée pour commander les moyens de commandes 611, 612, 613, 614, 615 du système pneumatique 6.

L'unité de traitement est programmée et/ou configurée pour commander le système de mise en mouvement.

Selon l'invention l'unité de traitement est embarquée dans le système de dépôt 1 mais elle peut ne pas faire partie du système de dépôt 1. L'unité de traitement comprend une carte mère. Elle comprend également une carte d'extension et un logiciel dédiés au contrôle du système pneumatique. Elle comprend également une carte d'extension dédiée au contrôle du système de mise en mouvement.

L'unité de traitement est agencée et/ou configurée pour calculer les pressions de réglage PM et la pression de dépôt PD, ou les pressions de dépôt PDᵢ, en fonction de paramètres physico-chimiques de la matière à déposer 3. Les caractéristiques du dépôt en termes de forme, dimension et géométrie sont fonction de ces paramètres et de paramètres physico-chimiques de la surface de dépôt 23.

En pratique, une gamme de pressions de dépôt PDᵢ sera associée à chaque matière à déposer 3. Cette gamme sera définie en fonction du type de dépôt souhaité (dimension(s), largeur(s), type de motif(s) et/ou de gouttes) et d'une gamme de vitesse de dépôt optimale. De manière préférée, l'unité de traitement est agencée et/ou configurée pour commander le système pneumatique 6 de sorte à appliquer une pression de réglage PM et une pression de dépôt PD, ou des pressions de dépôt PDᵢ successives, en fonction d'une matière à déposer 3 et du type de dépôt souhaité (dimension(s), largeur(s), type de motif(s) et/ou de gouttes).

L'unité de traitement est agencée et/ou configurée pour calculer et/ou adapter et/ou modifier la pression de dépôt PD, PDᵢ en fonction de la vitesse de déplacement du contenant 2, ou inversement.

A titre d'exemple non limitatif, pour une matière à déposer 3 dont la viscosité est d'environ de 100 centipoises, la pression de dépôt PD est d'environ 1 kPa en dessus de la pression atmosphérique pour une faible vitesse de déplacement du contenant 2 (égale ou inférieure à 0,5 mètres/minutes) et de 10 kPa en dessus de la pression atmosphérique pour une vitesse de déplacement élevée du contenant 2 (3 m/min).

A titre d'exemple non limitatif, pour une matière à déposer 3 dont la viscosité est d'environ de 5000 centipoises, la pression de dépôt PD est d'environ 25 kPa au-dessus de la pression atmosphérique pour une faible vitesse de déplacement du contenant 2 (égale ou inférieure à 0,5 mètres/minutes) et de 200 kPa au-dessus de la pression atmosphérique pour une vitesse de déplacement élevée du contenant 2 (3 m/min).

Le système de dépôt 1 comprend un capteur de distance (non représenté) agencé pour, préalablement au dépôt de la matière à déposer 3, mesurer une topographie de la surface de dépôt 23 le long du trajet prédéterminé selon lequel sera déposée la matière à déposer 3 de sorte à, lors du dépôt, maintenir constante une distance entre la sortie 5 du contenant 2 et la surface de dépôt 23, ou entre le plan 82 comprenant une extrémité du ménisque convexe 7 située du côté de la surface de dépôt 23 et la surface de dépôt 23, lors du déplacement du contenant 2 selon le trajet prédéterminé. Le capteur de distance peut être tout type de système connu de l'homme du métier tel que, à titre d'exemple non limitatif, un capteur optique, photoélectrique, capacitif, à ultrasons.

Le système de dépôt 1 permet donc de déposer de la matière à déposer 3 sur tout type de substrat 27 présentant tout type de topographie.

En référence à la FIGURE 2, le système de dépôt 1 comprend un élément apte à coulisser 13 dans le contenant 2 et agencé pour être en contact avec la matière à déposer 3. L'élément est agencé de sorte à reporter sur de la matière 3 contenue dans le contenant 2 la pression exercée par le gaz 12 sur l'élément 13.

Selon le premier mode de réalisation, l'élément apte à coulisser 13 dans le contenant 2 est, à titre d'exemple non limitatif, un piston 13.

Le piston 13 est disposé en amont, par rapport au chemin de gaz s'étendant depuis les sources de réglage R et de dépôt P1, Pᵢ vers le contenant 2, de la matière à déposer 3.

Le système de dépôt 1 comprend un système de mesure de pression 19 pour mesurer une pression dans une partie d'un circuit 20 de gaz reliant la vanne multivoies 613 à l'entrée 4. Le système de mesure de pression 19 mesure donc la pression du gaz contenu dans le volume 12 du contenant 2 qui est au contact de la matière à déposer 3.

En référence à la FIGURE 1, le contenant 2 est amovible et comprend un système de fixation 22 du contenant 2 à la partie du circuit 20 de gaz reliant la vanne multivoies 613 à l'entrée 4. Le contenant 2 est de préférence en polymère, par exemple en polypropylène, et présente un volume intérieur de quelques millilitres, par exemple 3, 5 ou 10 ml.

En référence aux FIGURES 1, 2, 3, 4 et 5, selon un second mode de réalisation de l'invention, il est décrit un procédé de dépôt mis en œuvre dans un système de dépôt, le système de dépôt comprenant :
- un contenant 2 dans lequel se trouve de la matière à déposer 3 et comprenant une entrée 4 et une sortie 5,
- un système pneumatique 6 comprenant des moyens de commande 611, 612, 613, 614, 615 du système pneumatique 6. Le procédé est caractérisé en ce que le système pneumatique 6 injecte, par l'entrée 4, du gaz dans le contenant 2 de sorte que ce gaz exerce, directement ou indirectement, une pression sur la matière à déposer 3. Le procédé comprend une commande, par les moyens de commande 611, 612, 613, 614, 615 du système pneumatique 6 :
   - d'une injection, par l'entrée 4, de gaz à une pression de réglage PM, de sorte qu'un ménisque convexe 7 de matière à déposer 3 fasse saillie du contenant 2 au niveau de la sortie 5, puis
   - d'au moins une injection, par l'entrée 4, de gaz respectivement à une pression de dépôt PD, ou à plusieurs pressions de dépôt PDᵢ, supérieure à la pression de réglage PM, de sorte que la matière à déposer 3 s'écoule en un dépôt de matière hors du contenant 2 par la sortie 5 sur une surface de dépôt 23.

Le procédé de dépôt selon le deuxième aspect de l'invention permet le dépôt de matière selon tout type de technique de dépôt connue de l'homme du métier (drop casting, jet d'encre, meniscus coating, extrusion).

Toute caractéristique du système de dépôt 1 selon le premier mode de réalisation peut être intégrée dans le système dépôt 1 dans lequel le procédé selon le second mode de réalisation est mis en œuvre.

Les caractéristiques décrites dans le premier mode de réalisation, y compris les caractéristiques décrites en tant qu'alternatives du premier mode de réalisation, sont compatibles et peuvent être combinées et/ou associées avec des caractéristiques quelconques du système dépôt 1 dans lequel le procédé selon le second mode de réalisation est mis en œuvre.

Le procédé comprend une commande, par les moyens de commande 611, 612, 613, 614, 615 de plusieurs injections, par l'entrée 4, de gaz à plusieurs pressions de dépôt PD, PDᵢ différentes les unes des autres, de sorte que la matière à déposer 3 s'écoule selon des vitesses différentes hors du contenant 2 par la sortie 5. Les pressions de dépôt PD, PDᵢ sont supérieures à la pression de réglage PM.

Les plusieurs injections, par l'entrée 4, de gaz à plusieurs pressions de dépôt PD, PDᵢ différentes les unes des autres sont réalisées successivement les unes aux autres.

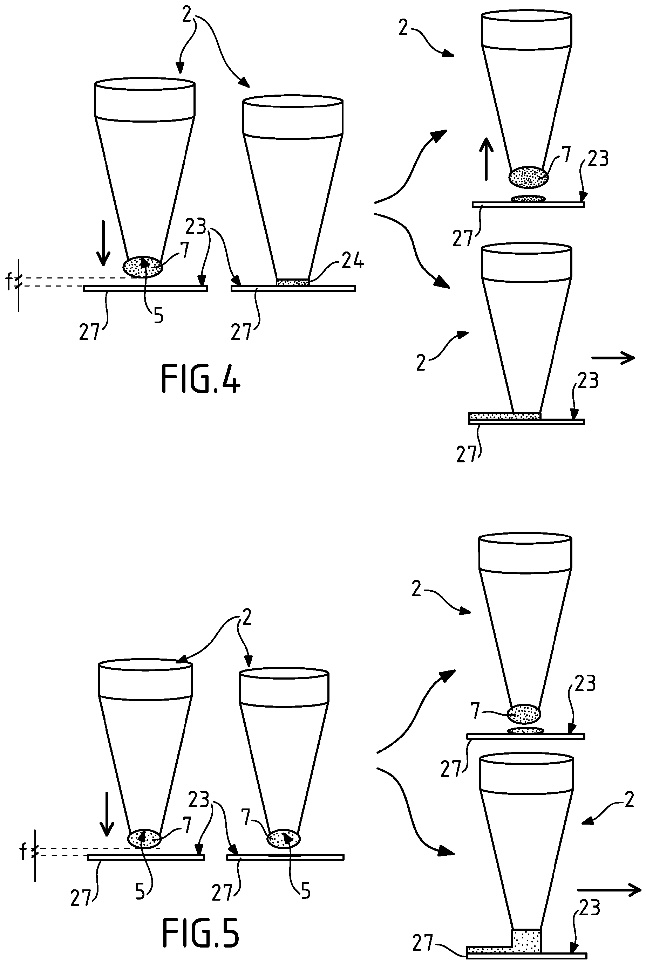

En référence à la FIGURE 4, le procédé comprend, entre l'injection de gaz à la pression de réglage PM et l'au moins une injection de gaz à la pression de dépôt PD, ou aux pressions de dépôt PDᵢ, une diminution d'une distance f entre le ménisque 7 et la surface de dépôt 23 jusqu'à formation d'un pont capillaire 24 entre ladite surface de dépôt 23 et le ménisque 7. Le procédé comprend également, subséquemment à la formation du pont capillaire 24, l'au moins une injection de gaz à la pression de dépôt PD, ou aux pressions de dépôt PDᵢ. Cela a pour effet que la matière à déposer 3 s'écoule hors du contenant 2. Subséquemment à l'au moins une injection de gaz à la pression de dépôt PD, ou les pressions de dépôt PDᵢ, le procédé comprend une nouvelle injection de gaz à la pression de réglage PM de sorte que la matière à déposer 3 ne s'écoule plus du contenant 2. Subséquemment à la nouvelle injection de gaz à la pression de réglage PM, une augmentation de la distance f entre le ménisque 7 et la surface 23 de dépôt jusqu'à une rupture du pont capillaire 24 entre la surface de dépôt 23 et le ménisque 7.

Dans certains cas, en fonction de l'état de surface de la surface de dépôt 23 et des tensions superficielles (coefficient d'étalement), subséquemment à la formation du pont capillaire mais préalablement à l'injection de gaz à la pression de dépôt PD, ou aux pressions de dépôt PDᵢ, le pont capillaire peut être rompu spontanément.

Selon une alternative, et en référence à la FIGURE 5, le procédé comprend, entre l'injection de gaz à la pression de réglage PM et l'au moins une injection de gaz à la pression de dépôt PD, ou aux pressions de dépôt PDᵢ, une diminution, jusqu'à une distance f souhaitée entre le ménisque 7 et la surface de dépôt 23 (sans formation de pont capillaire 24). Le procédé comprend également, l'au moins une injection de gaz à la pression de dépôt PD, ou aux pressions de dépôt PDᵢ de sorte que la matière à déposer 3 s'écoule, par exemple dans le cas d'un dépôt selon la technique d'extrusion, ou est projetée, par exemple dans le cas d'un dépôt selon la technique de jet d'encre, hors du contenant 2 en direction de la surface de dépôt 23. Subséquemment à l'au moins une injection de gaz à la pression de dépôt PD, ou aux pressions de dépôt PDᵢ, le procédé comprend une nouvelle injection de gaz à la pression de réglage PM de sorte que la matière à déposer 3 ne s'écoule plus du contenant 2.

Le procédé selon le second mode de réalisation est mis en œuvre dans un système de dépôt 1 dans lequel le système pneumatique 6 comprend une source R, dite de réglage, produisant du gaz à la pression de réglage PM et au moins une source P1, Pᵢ, dite de dépôt, produisant du gaz à une pression de source PS, ou à plusieurs pressions de source PSⱼ, étant, de préférence, au moins 1,01 fois, de préférence encore au moins 1,015 fois, supérieure à la pression de réglage PM.

Selon l'application visée, le procédé peut comprendre une modification à tout instant et/ou en temps réel et/ou en cours de dépôt, de la pression de source PS, PSⱼ et/ou de la pression de réglage PM de chaque source P1, Pᵢ, R du système de dépôt 1.

Par exemple, le procédé peut comprendre une modification de la pression de réglage PM de la source de réglage R :
- à une pression de source PS, PSⱼ, et par conséquent devenir, de manière temporaire ou définitive, une source de dépôt P1, Pᵢ, ou
- à une nouvelle pression de réglage différente de la pression de réglage PM avant modification.

De manière alternative ou complémentaire, le procédé peut comprendre une modification de la pression de source PS du gaz contenu dans une source de dépôt P1 ou de pressions de sources PS, PSⱼ de gaz contenues dans des sources de dépôt P1, Pi :
- à la pression de réglage PM ou à une nouvelle de réglage différente de la pression de réglage PM de la source de réglage R avant modification,
- à une nouvelle pression de source ou à des pressions de sources étant en partie identiques ou chacune différente des pressions de sources PS, PSⱼ avant modifications.

Le procédé selon le second mode de réalisation est mis en œuvre dans un système de dépôt 1, dans lequel le système pneumatique 6 comprend une seule source de dépôt P1.

Dans ce cas, la pression de sources PS peut être :
- supérieure à la pression de dépôt PD, ou à au moins une des pressions de dépôt PDᵢ, ou
- inférieure à la pression de dépôt PD, ou à au moins une des pressions de dépôt PDᵢ, ou
- égale à la pression de dépôt PD, ou à une des pressions de dépôt PDᵢ.

Lorsque la pression de dépôt PD ou des pressions de dépôt PDᵢ sont supérieures à la pression atmosphérique, la pression de sources PS est supérieure à la pression de dépôt PD ou à chaque pression de dépôt PDᵢ. De manière préférée, la pression de source PS est supérieure ou égale à une pression de dépôt PDₛᵤₚ qui est supérieure à toutes les autres pressions de dépôt PDᵢ.

Lorsque la pression de dépôt PD ou des pressions de dépôt PDᵢ sont inférieures à la pression atmosphérique, la pression de sources PS est inférieure à la pression de dépôt PD ou à chaque pression de dépôt PDᵢ. De manière préférée, la pression de source PS est inférieure ou égale à une pression de dépôt PD_{inf} qui est inférieure à toutes les autres pressions de dépôt PDᵢ.

Le procédé selon le second mode de réalisation est mis en œuvre dans un système de dépôt 1, dans lequel le système pneumatique 6 comprend plusieurs sources de dépôt P1, Pᵢ, chacune desdites plusieurs sources de dépôt P1, Pᵢ est agencée pour produire du gaz à une pression de source PSⱼ différente de chacune des autres pressions de source PSⱼ des autres sources de dépôt P1, PDᵢ.

Dans ce cas :
- chaque pression de source PSⱼ est égale à une pression de dépôt PDᵢ différente, ou
- au moins une pression de source PSⱼ est supérieure à la pression de dépôt PD, ou à chaque pression de dépôt PDᵢ, ou
- au moins une pression de source PSⱼ est inférieure à la pression de dépôt PD, ou à chaque pression de dépôt PDᵢ.

Lorsque la pression de dépôt PD ou des pressions de dépôt PDᵢ sont supérieures à la pression atmosphérique, au moins une pression de source PS_{Sup} est supérieure ou égale à la pression de dépôt PD, ou à une pression de dépôt PDₛᵤₚ qui est supérieure à toutes les autres pressions de dépôt PDᵢ.

Lorsque la pression de dépôt PD ou des pressions de dépôt PDᵢ sont inférieures à la pression atmosphérique, au moins une pression de source PS_{inf} est inférieure ou égale à la pression de dépôt PD, ou à une pression de dépôt PD_{inf} qui est inférieure à toutes les autres pressions de dépôt PDᵢ.

Lorsqu'une partie des pressions de dépôt PDᵢ sont inférieures à la pression atmosphérique et qu'une autre partie des pressions de dépôt PDᵢ sont supérieures à la pression atmosphérique :
- au moins une pression de source PSₛᵤₚ est supérieure ou égale à une pression de dépôt PDₛᵤₚ qui est supérieure à toutes les autres pressions de dépôt PDᵢ et au moins une pression de source PS_{inf} est inférieure ou égale à une pression de dépôt PD_{inf} qui est inférieure à toutes les autres pressions de dépôt PDᵢ, ou
- au moins une pression de source PSₛᵤₚ est supérieure ou égale à une pression de dépôt PDₛᵤₚ qui est supérieure à toutes les autres pressions de dépôt PDᵢ et la pression de réglage PM est inférieure à une pression de dépôt PD_{inf} qui est inférieure à toutes les autres pressions de dépôt PDᵢ.

Le procédé selon le second mode de réalisation est mis en œuvre dans un système de dépôt 1 dans lequel la pression PD, ou plusieurs des pressions de dépôt PDᵢ, de gaz injecté dans le contenant 2 est obtenue par :
- mélange de gaz provenant d'une source de dépôt P1, Pᵢ et de gaz provenant d'au moins une autre des sources P1, Pᵢ de dépôt, et/ou
- diminution ou augmentation de la pression de gaz provenant d'au moins une des sources P1, Pᵢ de dépôt.

Le procédé selon le second mode de réalisation est mis en œuvre dans un système de dépôt 1 dans lequel la source de réglage R et/ou chaque source de dépôt P1, Pᵢ est un réservoir 9 stockant du gaz à sa pression respective de réglage PM et/ou de source PSⱼ.

Le procédé selon le second mode de réalisation est mis en œuvre dans un système de dépôt 1 dans lequel chaque réservoir 9 considéré présente un volume au moins 5 fois, de préférence au moins 10 fois, supérieur à la somme du volume du contenant 2 et du volume d'un circuit de gaz 10, 11, 20, 25, 26 reliant ce réservoir 9 considéré à l'entrée 4.

Le procédé selon le second mode de réalisation comprend une commutation, par une vanne multivoies 613, dite de commutation, des moyens de commande 6, d'une injection de gaz provenant d'une source de dépôt P1, Pᵢ ou de réglage R vers une injection de gaz provenant d'une autre source de dépôt P1, Pᵢ ou de réglage R de manière à opérer un changement instantané de pression dans le contenant 2. La vanne de commutation 613 est reliée :
- à l'entrée du contenant 2,
- à au moins une des sources R, P1, Pᵢ,
- à un système de remise à l'air 171.
Le fait que le réservoir 9 présente un volume au moins 5 fois supérieur à la somme du volume du contenant 2 et du volume d'un circuit 10, 11, 20, 25, 26 de gaz reliant ce réservoir 9 considéré à l'entrée 4, un changement instantané de pression dans le contenant 2 est opéré lors d'une commutation, par la vanne multivoies de commutation 613, d'une injection de gaz provenant d'une source de dépôt P1, Pᵢ ou de réglage R vers une injection de gaz provenant d'une autre source de dépôt Pᵢ ou de réglage R.

Le procédé selon le second mode de réalisation, comprend une mise en mouvement, par un système de mise en mouvement, du contenant 2 relativement à la surface de dépôt 23, ou inversement, dans un plan parallèle à la surface de dépôt 23, dit plan xy, selon un trajet prédéterminé. De manière alternative ou complémentaire, en fonction du type de technique de dépôt utilisé, le procédé comprend un éloignement et/ou un rapprochement, par le système de mise en mouvement, du contenant 2 relativement de la surface de dépôt 23, ou inversement.

Le procédé permet de déposer sans contact la matière à déposer 3 selon plusieurs techniques de dépôt de sorte à obtenir tout type de motifs et de formes de matière déposée.

En référence aux FIGURES 4 et 5, il est illustré un procédé de dépôt de matière sous forme de goutte. Il peut être réalisé selon le procédé de type drop casting dans lequel le ménisque 7 est porté en contact de la surface de dépôt 23 pour former le pont capillaire 24 (FIGURE 4) ou selon le procédé de type jet d'encre selon lequel la goutte est projetée sur la surface de dépôt 23 depuis le contenant 2 (depuis le ménisque 7) par application d'une pression de dépôt PD, PDᵢ sans formation préalable du pont capillaire 24 (FIGURE 5).

En référence à la FIGURE 4, il est illustré un procédé de dépôt sans contact dans lequel le ménisque 7 est porté en contact de la surface de dépôt 23 pour former le pont capillaire 24. Selon ce procédé (de type meniscus coating), la matière à déposer 3 est déposée sous forme de motifs (lignes, films, points...). Ce procédé est adapté au dépôt de tout type de matière liquide ou de pâtes.

En référence à la FIGURE 5, il est illustré un procédé sans contact selon lequel la matière à déposer 3 s'écoule depuis le contenant 2 sans qu'il y ait formation d'un pont capillaire 24 au préalable. Selon ce type de procédé (type jet d'encre, formation de bourrelets ou extrusion), la matière à déposer 3 est déposée sous forme de motifs (lignes, films, points...). Ce procédé est adapté au dépôt de tout type de matière gels, de pâtes ou de solides.

Le système de dépôt 1 donc de déposer de la matière à déposer 3 sur tout type de substrat 27 présentant tout type de rugosité.

Le procédé selon le second mode de réalisation, comprend une commande, par une unité de traitement, d'une quantité de matière déposée sur la surface de dépôt 23 en fonction d'une position relative du contenant 2 par rapport à ladite surface 23 en opérant :
- une modification et/ou une adaptation de la vitesse relative du contenant 2 par rapport à la surface de dépôt 23, ou inversement, et/ou
- une modification et/ou une adaptation d'une distance entre la sortie 5 du contenant 2 et la surface de dépôt 23, et/ou
- une modification et/ou adaptation de la pression de dépôt PDᵢ sélectionnée.

Le procédé selon le second mode de réalisation, comprend un contrôle, par l'unité de traitement, de la quantité de matière déposée et/ou de la position relative du contenant 2 par rapport à la surface de dépôt 23 au moyen d'un ou plusieurs dispositifs d'imagerie optique imageant une zone de dépôt, et/ou une zone comprenant la sortie 5 du contenant 2, et/ou au moins une partie de la surface de dépôt 23. En fonction de ce contrôle, une modification et/ou un ajustement, par l'unité de traitement :
- de la pression de gaz injecté dans le contenant 2, et/ou
- de la vitesse de déplacement relative du contenant 2 par rapport à la surface de dépôt 23, ou inversement, et/ou
- de la distance entre la sortie 5 et la surface de dépôt 23, et/ou
- de la position relative du contenant 2 par rapport à la surface de dépôt 23.

Selon le mode réalisation, le système de dépôt 1 comprend une caméra de type endoscopique (un capteur CMOS associé à une lentille présentant une distance focale de 28 mm) fixée sur le contenant 2 et agencée pour imager en permanence la sortie 5 du contenant 2 et/ou la surface de dépôt 23.

Selon le mode réalisation, le système de dépôt 1 comprend également une caméra latérale (un capteur CMOS associé à une lentille présentant une distance focale de 16 mm) fixe par rapport au substrat 27 et agencée pour mesurer un angle de goutte formé entre le ménisque 7 de matière à déposer 3 et la sortie 5 du contenant 2.

Le procédé selon le second mode de réalisation, comprend une mesure, par un capteur de distance et préalablement au dépôt de la matière à déposer 3, d'une topographie de la surface de dépôt 23 le long du trajet prédéterminé selon lequel sera déposée la matière à déposer 3. La mesure de cette topographie permet, lors du dépôt, un maintien, par l'unité de traitement, d'une distance constante entre la sortie 5 du contenant 2 et la surface de dépôt 23 lors du déplacement du contenant 2 selon le trajet prédéterminé.

Le procédé selon le second mode de réalisation, comprend :
- une diminution, ou respectivement une augmentation, par une vanne multivoies de régulation de pression 615, dite vanne de dépôt, des moyens de commande 611, 612, 613, 614, 615 du système de dépôt 1, de la pression PS, PSⱼ du gaz d'une source de dépôt P1, Pi jusqu'à une pression de dépôt intermédiaire PD_{INT} inférieure, ou respectivement supérieure, à la pression de source PSⱼ de cette source de dépôt P1, Pi et supérieure à la pression PM. Le procédé comprend l'étape consistant à délivrer, par les moyens de commande 611, 612, 613, 614, 615 du gaz à la pression PD_{INT} dans une partie d'un circuit 11, constituant une source de dépôt, reliant ladite vanne de dépôt 615 à la vanne multivoies de commutation supplémentaire 612.

La vanne de dépôt 615 est située en aval d'une ou de plusieurs sources de dépôt P1, Pᵢ et en amont de ladite vanne multivoies de commutation 613 par rapport à un chemin de gaz s'étendant depuis les sources de réglage R et de dépôt P1, Pᵢ vers le contenant 2.

Le procédé selon le second mode de réalisation, comprend une mesure d'une pression dans une partie d'un circuit 20 de gaz reliant la vanne multivoies 613 à l'entrée 4.

Le procédé selon le second mode de réalisation, comprend un calcul de la pression de réglage PM et de la pression de dépôt PD ou des pressions de dépôt PDᵢ en fonction de paramètres physico-chimiques de la matière à déposer 3 formant le ménisque 7. Les caractéristiques du dépôt en termes de forme, dimension et géométrie sont fonction de ces paramètres et de paramètres physico-chimiques de la surface de dépôt 23.

Le système de dépôt 1 dans lequel le procédé selon le second mode de réalisation est mis en œuvre, est le système de dépôt 1 selon le premier mode de réalisation.

Le dispositif de dépôt 1 selon le premier mode de réalisation est agencé pour mettre en œuvre le procédé selon le second mode de réalisation.

Bien sûr, l'invention n'est pas limitée aux exemples qui viennent d'être décrits et de nombreux aménagements peuvent être apportés à ces exemples sans sortir du cadre de l'invention.

Ainsi, dans des variantes combinables entre elles des modes de réalisation précédemment décrits :
- le système pneumatique 6 est connecté de manière amovible à l'entrée 4 du contenant 2, et/ou
- selon une deuxième alternative du premier mode de réalisation du système de dépôt 1, le système pneumatique 6 comprend plusieurs sources P1, Pᵢ de dépôt, chacune des plusieurs sources de dépôt P1, Pᵢ est agencée pour produire du gaz à une pression de source PSⱼ différente de chacune des autres pressions de source PSⱼ des autres sources de dépôt P1, Pᵢ, et/ou

- selon la deuxième alternative du premier mode de réalisation :
   - l'ensemble des pressions de sources PSⱼ et la pression de réglage PM sont supérieures à la pression atmosphérique, ou
   - l'ensemble des pressions de sources PSⱼ et la pression de réglage PM sont inférieures à la pression atmosphérique, ou
   - une partie des pressions de sources PSⱼ est supérieure à la pression atmosphérique, une autre partie des pressions de sources PSⱼ est inférieure à la pression atmosphérique et la pression de réglage PM est inférieure à la pression atmosphérique, et/ou
- selon la deuxième alternative du premier mode de réalisation :
   - chaque pression de source PSⱼ est égale à une pression de dépôt PDᵢ différente ; dans ce cas chaque réservoir 9 peut être une source P1, Pᵢ contenant du gaz à une pression de source PSⱼ, différente de chaque autre pression de source PSⱼ de chaque autre réservoir 9, ou
   - lorsque la pression de dépôt PD ou des pressions de dépôt PDᵢ sont supérieures à la pression atmosphérique, au moins une pression de source PSⱼ est supérieure à la pression de dépôt PD, ou à chaque pression de dépôt PDᵢ, ou
   - lorsque la pression de dépôt PD ou des pressions de dépôt PDᵢ sont supérieures à la pression atmosphérique, au moins une pression de source PSₛᵤₚ est supérieure ou égale à la pression de dépôt PD, ou à une pression de dépôt PDₛᵤₚ qui est supérieure à toutes les autres pressions de dépôt PDᵢ, ou
   - lorsque la pression de dépôt PD ou des pressions de dépôt PDᵢ sont inférieures à la pression atmosphérique, au moins une pression de source PSⱼ est inférieure à la pression de dépôt PD, ou à chaque pression de dépôt PDᵢ, ou
   - lorsque la pression de dépôt PD ou des pressions de dépôt PDᵢ sont inférieures à la pression atmosphérique, au moins une pression de source PS_{inf} est inférieure ou égale à la pression de dépôt PD, ou à une pression de dépôt PD_{inf} qui est inférieure à toutes les autres pressions de dépôt PDᵢ, ou
   - lorsqu'une partie des pressions de dépôt PDᵢ sont inférieures à la pression atmosphérique et qu'une autre partie des pressions de dépôt PDᵢ sont supérieures à la pression atmosphérique, au moins une pression de source PSₛᵤₚ est supérieure ou égale à une pression de dépôt PDₛᵤₚ qui est supérieure à toutes les autres pressions de dépôt PDᵢ et au moins une pression de source PS_{inf} est inférieure ou égale à une pression de dépôt PD_{inf} qui est inférieure à toutes les autres pressions de dépôt PDᵢ, ou
   - lorsqu'une partie des pressions de dépôt PDᵢ sont inférieures à la pression atmosphérique et qu'une autre partie des pressions de dépôt PDᵢ sont supérieures à la pression atmosphérique, au moins une pression de source PSₛᵤₚ est supérieure ou égale à une pression de dépôt PDₛᵤₚ qui est supérieure à toutes les autres pressions de dépôt PDᵢ et la pression de réglage PM est inférieure à une pression de dépôt PD_{inf} qui est inférieure à toutes les autres pressions de dépôt PDᵢ, et/ou
- selon la première alternative du premier mode de réalisation, le système pneumatique 6 est agencé de sorte que la pression de dépôt PD, ou plusieurs des pressions de dépôt PDᵢ, de gaz injecté dans le contenant 2 est obtenue par :
   - mélange de gaz provenant de la source de réglage R et de gaz provenant de la source P1 de dépôt, et/ou
   - diminution ou augmentation de la pression de gaz provenant de la source P1 de dépôt, et/ou
   - augmentation de la pression de gaz provenant de la source de réglage R, et/ou
- selon la deuxième alternative du premier mode de réalisation, le système pneumatique 6, est agencé de sorte que la pression de dépôt PD, ou plusieurs des pressions de dépôt PDᵢ, de gaz injecté dans le contenant 2 est obtenue par :
   - mélange de gaz provenant de la source de réglage R et de gaz provenant d'au moins une des sources de dépôt P1, Pᵢ, et/ou
   - mélange de gaz provenant d'une source de dépôt P1, Pᵢ et de gaz provenant d'au moins une autre des sources P1, Pᵢ de dépôt, et/ou
   - diminution ou augmentation de la pression de gaz provenant d'au moins une des sources de dépôt P1, Pᵢ, et/ou
   - augmentation de la pression de gaz provenant de la source de réglage R, et/ou
- à titre d'exemple non limitatif et en référence à la deuxième alternative du premier mode de réalisation du système de dépôt 1, il est décrit, à titre d'exemple non limitatif, un agencement des moyens de commande 611, 612, 613, 614, 615 permettant le mélange de gaz, ainsi que la diminution et l'augmentation de la pression de gaz, et/ou
- selon la deuxième alternative du premier mode de réalisation du système de dépôt 1, les moyens de commande 611, 612, 613, 614, 615 du système de dépôt 1 comprennent une ou des vannes multivoies de régulation de pression, dite vannes de dépôt, permettant d'augmenter ou de diminuer la pression de gaz provenant de la source de réglage R et/ou des sources de dépôt P1, Pᵢ ; une ou plusieurs de ces vannes de dépôt sont situées, par rapport à un chemin de gaz s'étendant depuis les sources de réglage R et de dépôt P1, Pᵢ vers le contenant 2 :
   - en aval de la source de réglage R,
   - et/ou en aval de chacune des sources de dépôt P1, Pᵢ et en amont de la vanne multivoies 613 ;
   cette vanne ou ces vannes de dépôt sont agencées pour :
   - lorsque la pression de source PM est inférieure à la pression atmosphérique, augmenter la pression du gaz PM de la source de réglage R jusqu'à une pression de dépôt intermédiaire PD_{INT} supérieure à la pression de réglage PM et inférieure à moins une des pressions de sources PSⱼ, ou
   - de manière préférée, lorsque la pression de source PM est inférieure à la pression atmosphérique, augmenter la pression du gaz PM de la source de réglage R jusqu'à une pression de dépôt intermédiaire PD_{INT} supérieure à la pression de réglage PM et inférieure à chacune des pressions de sources PSⱼ, et/ou
   - lorsque les pressions de source PSⱼ sont supérieures à la pression atmosphérique, diminuer une ou des pressions du gaz PSⱼ d'une ou de plusieurs sources P1, Pᵢ de dépôt jusqu'à une ou des pressions de dépôt intermédiaires PD_{INT} inférieures à la ou aux pressions de source PSⱼ de cette source ou de ces sources P1, Pᵢ de dépôt et supérieures à la pression de réglage PM, ou
   - lorsque les pressions de source PSⱼ sont inférieures à la pression atmosphérique, augmenter une ou des pressions PSⱼ du gaz d'une ou de plusieurs sources P1, Pᵢ de dépôt jusqu'à une ou des pressions de dépôt intermédiaire PD_{INT} supérieures à la ou aux pressions de source PSⱼ de cette source ou de ces sources P1, Pᵢ de dépôt et supérieures à la pression de réglage PM, ou
   - lorsque la pression de réglage est inférieure à 100 kPa et qu'une première partie des pressions de source PSⱼ sont inférieures à la pression atmosphérique et qu'une deuxième partie des pressions de sources PSⱼ sont supérieures à la pression atmosphérique :
      - augmenter la pression du gaz PM de la source de réglage R jusqu'à une pression de dépôt intermédiaire PD_{INT} supérieure à la pression de réglage PM et inférieure à chacune des pressions de sources PSⱼ, et/ou
      - augmenter une ou des pressions PSⱼ du gaz d'une ou de plusieurs sources P1, Pᵢ de dépôt de la première partie jusqu'à une ou des pressions de dépôt intermédiaire PD_{INT} supérieures à la ou aux pressions de source PSⱼ de cette source ou de ces sources P1, Pᵢ de dépôt et supérieures à la pression de réglage PM, et/ou
      - diminuer une ou des pressions PSⱼ du gaz d'une ou de plusieurs sources P1, Pᵢ de dépôt de la deuxième partie jusqu'à une ou des pressions de dépôt intermédiaire PD_{INT} inférieures à la ou aux pressions de source PSⱼ de cette ou de ces sources P1, Pᵢ de dépôt et supérieures à la pression de réglage PM, et/ou
- selon la deuxième alternative du premier mode de réalisation du système de dépôt 1, la partie du système pneumatique 6 comprise entre une source de dépôt considérée parmi les sources de dépôt P1, Pᵢ et la vanne de commutation 613 comprend :
   - une ou plusieurs vannes multivoies de commutation supplémentaires (611, 612, 614) et/ou
   - une ou plusieurs vannes de dépôt 615, et/ou
- selon la deuxième alternative du premier mode de réalisation du système de dépôt 1, une vanne multivoies de commutation supplémentaire permet :
   - d'injecter dans un circuit de gaz 26, du gaz à la pression de réglage PM et permet la remise à l'air de la source de réglage R, et/ou
   - d'injecter dans le circuit de gaz 25 du gaz à la pression de source PS, PSⱼ, à la pression de dépôt PD, PDᵢ ou à une pression de dépôt intermédiaire (PD_{INT}) et permet la remise à l'air du contenant 2, et/ou
   - d'injecter dans le circuit de gaz 11 du gaz à la pression de source PS, PSⱼ, à la pression de dépôt PD, PDᵢ ou à une pression de dépôt intermédiaire (PD_{INT}) et permet la remise à l'air de la source de dépôt considérée, et/ou
- selon la deuxième alternative du premier mode de réalisation du système de dépôt 1, les moyens de commande 611, 612, 613, 614, 615 sont agencés pour délivrer du gaz à la pression PD_{INT} dans une partie d'un circuit 11, constituant une source de dépôt, reliant la vanne de dépôt 615 à la vanne multivoies de commutation 612, et/ou
- selon la deuxième alternative du premier mode de réalisation du système de dépôt 1, les moyens de commande 611, 612, 613, 614, 615 du système de dépôt 1 comprennent deux vannes de dépôt 615 ou plus, et/ou
- selon la deuxième alternative du premier mode de réalisation du système de dépôt 1, les moyens de commande 611, 612, 613, 614, 615 du système de dépôt 1 comprennent deux vannes de commutation 613 ou plus, et/ou
- selon la deuxième alternative du premier mode de réalisation du système de dépôt 1, les moyens de commande 611, 612, 613, 614, 615 du système de dépôt 1 comprennent deux vannes de dépôt 615 ou plus, une des vannes de dépôt 615 est reliée à une source P1, Pᵢ de dépôt et une autre des vannes de dépôt 615 est reliée à une autre des sources P1, Pᵢ de dépôt, et/ou
- selon la deuxième alternative du premier mode de réalisation du système de dépôt 1, les moyens de commande 611, 612, 613, 614, 615 du système de dépôt 1 comprennent deux vannes de dépôt 615 ou plus, chacune des vannes de dépôt 615 est reliée à une source P1, Pᵢ différente et présentant chacune une pression supérieure à la pression atmosphérique, et/ou
- selon la deuxième alternative du premier mode de réalisation du système de dépôt 1, les moyens de commande 611, 612, 613, 614, 615 du système de dépôt 1 comprennent deux vannes de dépôt 615 ou plus, chacune des vannes de dépôt 615 est reliée à une source P1, Pᵢ différente et présentant chacune une pression inférieure à la pression atmosphérique, et/ou
- selon la deuxième alternative du premier mode de réalisation du système de dépôt 1, les moyens de commande 611, 612, 613, 614, 615 du système de dépôt 1 comprennent deux vannes de dépôt 615 ou plus, une des vannes de dépôt 615 est reliée à une source P1, Pᵢ de dépôt présentant une pression de source PSⱼ supérieure à la pression atmosphérique et une autre des vannes de dépôt 615 est reliée à une autre des sources P1, Pᵢ de dépôt présentant une pression de source PSⱼ inférieure à la pression atmosphérique, et/ou
- selon la deuxième alternative du premier mode de réalisation du système de dépôt 1, les moyens de commande 611, 612, 613, 614, 615 du système de dépôt 1 comprennent deux vannes de dépôt 615 ou plus, une des vannes de dépôt 615 étant reliée à une source P1, Pᵢ de dépôt présentant une pression de source PSⱼ supérieure à la pression atmosphérique et une autre des vannes de dépôt 615 étant reliée à la source de réglage R présentant une pression de réglage PM inférieure à la pression atmosphérique, et/ou
- selon la deuxième alternative du premier mode de réalisation du système de dépôt 1, les moyens de commande 611, 612, 613, 614, 615 du système de dépôt 1 comprennent deux vannes de dépôt 615 ou plus, une des vannes de dépôt 615 étant reliée à une source P1, Pᵢ de dépôt présentant une pression de source PSⱼ inférieure à la pression atmosphérique et une autre des vannes de dépôt 615 étant reliée à la source de réglage R présentant une pression de réglage PM inférieure à la pression atmosphérique, et/ou
- selon la deuxième alternative du premier mode de réalisation du système de dépôt 1, les moyens de commande 611, 612, 613, 614, 615 du système de dépôt 1 comprennent plus de deux vannes de dépôt 615, une vanne de dépôt 615 est reliée à une source P1, Pᵢ de dépôt présentant une pression de source PSⱼ supérieure à la pression atmosphérique, une autre vanne de dépôt 615 est reliée à une source P1, Pᵢ de dépôt présentant une pression de source PSⱼ inférieure à la pression atmosphérique, et une autre des vannes de dépôt 615 est reliée à la source de réglage R présentant une pression de réglage PM inférieure à la pression atmosphérique, et/ou
- selon la deuxième alternative du premier mode de réalisation du système de dépôt 1, lorsque le gaz injecté dans le contenant 2, par l'entrée 4, est à une pression de dépôt PD1, PD_{INT1}, PS1 une commutation, par la vanne de commutation 613, d'une injection de gaz provenant d'un circuit de gaz contenant du gaz à la pression de dépôt PD1, PD_{INT1}, PS1 considérée vers une injection de gaz provenant d'un circuit de gaz contenant du gaz à une autre pression de dépôt PD2, PD_{INT2}, PS2 permettra d'injecter, par l'entrée 4 dans le contenant 2, du gaz à la pression de dépôt PD2, PD_{INT2}, PS2, et/ou
- chaque réservoir 9 considéré présente un volume au moins 10 fois, de préférence au moins 20 fois, de préférence encore au moins 50 fois et de manière d'avantage préféré au moins 100 fois supérieur à la somme du volume du contenant 2 et du volume d'un circuit 10, 11, 20, 25, 26 de gaz reliant ce réservoir 9 considéré à l'entrée 4, et/ou
- le système de dépôt 1 comprend un ou plusieurs dispositifs d'imagerie optique agencés pour imager une zone de dépôt, et/ou une zone comprenant la sortie 5 du contenant 2, et/ou au moins une partie de la surface de dépôt 23, de sorte que l'unité de traitement soit agencée pour contrôler la quantité de matière déposée et/ou la position relative du contenant 2 par rapport à la surface de dépôt 23 ; en fonction de ce contrôle, l'unité de traitement est agencée pour modifier et/ou ajuster :
   - la pression de gaz injecté dans le contenant 2, et/ou
   - la vitesse de déplacement relative du contenant 2 par rapport à la surface de dépôt 23, ou inversement, et/ou
   - la distance entre la sortie 5 et la surface de dépôt 23, et/ou
   - la position relative du contenant 2 par rapport à la surface de dépôt 23, et/ou
- le système de dépôt 1 comprend un émetteur lumineux agencé pour émettre des photons de longueur d'onde comprise entre 150 et 600 nm, et/ou
- le système de dépôt 1 comprend un système d'émission laser agencé pour :
   - graver le dépôt de matière et/ou la surface de dépôt 23 portant le dépôt de matière et/ou une pièce comprenant la surface de dépôt 23, et/ou
   - découper le dépôt de matière et/ou la surface de dépôt 23 portant le dépôt de matière et/ou une pièce comprenant la surface de dépôt 23, et/ou
   - recuire le dépôt de matière, et/ou
- la sortie 5 du contenant 2 est située dans une enceinte refermant une atmosphère, ledit système comprenant en outre des moyens pour contrôler ladite atmosphère, lesdits moyens de contrôle comprenant :
   - un système de filtration de l'atmosphère agencé pour contrôler une concentration en particules dans l'atmosphère introduit dans l'enceinte, et/ou
   - un dispositif agencé pour stériliser l'atmosphère et/ou la zone de dépôt et/ou le contenant et/ou la matière à déposer, et/ou
   - un dispositif agencé pour modifier un taux d'hygrométrie de l'atmosphère de l'enceinte, et/ou
   - un dispositif agencé pour modifier une température de l'enceinte, et/ou
- le système de dépôt 1 comprend un élément chauffant relié au contenant 2 et agencé de sorte à chauffer la matière à déposer 3 contenue dans le contenant 2, et/ou
- l'élément chauffant peut être agencé pour chauffer la matière à déposer 3 de sorte à :
   - diminuer une viscosité de la matière à déposer 3, et/ou
   - liquéfier la matière à déposer 3, et/ou
   - adapter la viscosité de la matière à déposer 3 de sorte que la quantité déposée soit constante lorsque la température environnante varie, et/ou
- la matière à déposer 3 peut être une matière à extruder, et/ou
- l'unité de traitement est programmée et/ou configurée pour mettre en œuvre une fabrication additive à partir de fichier(s) numérique(s), et/ou
- le système de dépôt 1 comprend un élément de régulation de température de la surface de dépôt 23, et/ou
- le système de dépôt 1 comprend un embout amovible 21 connecté au contenant 2, l'embout amovible 21 comporte la sortie 5 par laquelle s'écoule la matière à déposer 3, et/ou
- le système de dépôt 1 comprend un système de nettoyage du contenant 2 et/ou de l'embout 21 du contenant 2, et/ou
- le procédé selon le second mode de réalisation, dans lequel la pression de réglage PM et la pression de dépôt PD, ou chacune des pressions de dépôt PDᵢ, sont inférieures ou égales à 200 kPa au-dessus de la pression atmosphérique, et/ou
- le procédé selon le second mode de réalisation, dans lequel la pression de réglage PM peut être inférieure à la pression atmosphérique, et/ou
- le procédé selon le second mode de réalisation, dans lequel la pression de réglage PM et la pression de dépôt PD, ou chacune des pressions de dépôt PDᵢ, sont inférieures à la pression atmosphérique, et/ou
- le procédé selon le second mode de réalisation est mis en œuvre dans un système de dépôt 1 dans lequel la pression PD, ou plusieurs des pressions de dépôt PDᵢ, de gaz injecté dans le contenant 2 est obtenue par :
   - mélange de gaz provenant de la source de réglage R et de gaz provenant d'au moins une des sources P1, Pᵢ de dépôt, et/ou
   - mélange de gaz provenant d'une source de dépôt P1, Pᵢ et de gaz provenant d'au moins une autre des sources P1, Pᵢ de dépôt, et/ou
   - diminution ou augmentation de la pression de gaz provenant d'au moins une des sources P1, Pᵢ de dépôt, et/ou
   - augmentation de la pression de gaz provenant de la source de réglage R.
- le procédé selon le second mode de réalisation, comprenant une application indirecte, sur la matière à déposer 3, de la pression exercée par le gaz, l'application de la pression étant exercée sur un élément apte à coulisser 13 dans le contenant 2 et disposé au contact de la matière à déposer 3, et/ou
- le procédé selon le second mode de réalisation, comprend une réticulation de la matière déposée sur la surface de dépôt 23, et/ou une désinfection de la surface de dépôt 23 au moyen d'un émetteur lumineux, l'émetteur lumineux émettant de préférence des photons de longueur d'onde comprise entre 150 et 600 nm, et/ou
- le procédé selon le second mode de réalisation comprend :
   - une gravure du dépôt de matière et/ou de la surface de dépôt 23 et/ou d'une pièce comprenant la surface de dépôt 23, et/ou
   - une découpe du dépôt de matière et/ou de la surface de dépôt et/ou d'une pièce comprenant la surface de dépôt 23, et/ou
   - un recuit du dépôt, et/ou
- le procédé selon le second mode de réalisation est mis en œuvre dans un système de dépôt 1 dans lequel, la sortie 5 est située dans une enceinte refermant une atmosphère ; le procédé comprend en outre un contrôle de l'atmosphère de dépôt, l'atmosphère de dépôt comprenant :
   - une filtration de l'atmosphère de sorte à contrôler une concentration de particules dans l'atmosphère introduit dans l'enceinte, et/ou
   - une stérilisation de l'atmosphère et/ou de la zone de dépôt et/ou du contenant et/ou de la matière à déposer, et/ou
   - une modification d'un taux d'hygrométrie de l'atmosphère, et/ou
   - une modification d'une température de dépôt, et/ou
- le procédé selon le second mode de réalisation, comprend une étape de chauffage de la matière à déposer 3 de sorte à mettre en œuvre une extrusion de la matière 3 contenue dans le contenant 2, et/ou
- le procédé selon le second mode de réalisation, comprend une mise en œuvre d'une fabrication additive à partir de fichier(s) numérique(s), et/ou
- le procédé selon le second mode de réalisation, comprend une régulation d'une température de la surface de dépôt 23, et/ou
- le procédé selon le second mode de réalisation, comprend une étape de nettoyage de tout ou partie du contenant 2.

De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Système de dépôt (1) comprenant :
- un contenant (2) agencé pour contenir de la matière à déposer (3) et comprenant une entrée (4) et une sortie (5),
- un système pneumatique (6) agencé pour injecter, par l'entrée, du gaz dans le contenant de sorte que ce gaz exerce, directement ou indirectement, une pression sur la matière à déposer,
le système de dépôt comprenant des moyens de commande (611, 612, 613, 614, 615) du système pneumatique agencés pour commander au moins :
• une injection, par l'entrée, de gaz à une pression de réglage (PM), de sorte qu'un ménisque convexe (7) de matière à déposer fasse saillie du contenant au niveau de la sortie, puis
• au moins une injection, par l'entrée, de gaz à respectivement au moins une pression de dépôt (PD, PDᵢ) supérieure à la pression de réglage, de sorte que la matière à déposer s'écoule hors du contenant par la sortie.

2. Système de dépôt (1) selon la revendication 1, dans lequel les moyens de commande (611, 612, 613, 614, 615) du système pneumatique (6) sont agencés pour commander plusieurs injections, par l'entrée (4), de gaz à plusieurs pressions de dépôt (PD, PDᵢ) différentes les unes des autres de sorte que la matière à déposer (3) s'écoule selon des vitesses différentes hors du contenant (2) par la sortie (5), lesdites pressions de dépôt étant supérieures à la pression de réglage (PM).

3. Système de dépôt (1) selon la revendication 1 ou 2, dans lequel le système pneumatique (6) comprend une source (R), dite de réglage, agencée pour produire du gaz à la pression de réglage (PM) et au moins une source (P1, Pᵢ), dite de dépôt, agencée pour produire du gaz à au moins une pression de source (PS, PSⱼ), ladite au moins une pression de source étant, de préférence, au moins 1,01 fois, de préférence encore au moins 1,015 fois, supérieure à la pression de réglage.

4. Système de dépôt (1) selon la revendication 3, dans lequel le système pneumatique (6) comprend une seule source de dépôt (P1).

5. Système de dépôt (1) selon la revendication 4, dans lequel la pression de sources (PS) est supérieure à la pression de dépôt (PD), ou à au moins une des pressions de dépôt (PDᵢ).

6. Système de dépôt (1) selon la revendication 4, dans lequel la pression de sources (PS) est inférieure à la pression de dépôt (PD), ou à au moins une des pressions de dépôt (PDᵢ).

7. Système de dépôt (1) selon l'une quelconque des revendications 4 à 6, dans lequel la pression de source (PS) est égale à la pression de dépôt (PD), ou à une des pressions de dépôt (PDᵢ).

8. Système de dépôt (1) selon l'une quelconque des revendications 4 à 7, dans lequel le système pneumatique (6) est agencé de sorte que la pression de dépôt (PD), ou plusieurs des pressions de dépôt (PDᵢ), de gaz injecté dans le contenant (2) est obtenue par :
- mélange de gaz provenant de la source de réglage (R) et de gaz provenant de la source de dépôt (P1), et/ou
- diminution ou augmentation de la pression de gaz provenant de la source de dépôt, et/ou
- augmentation de la pression de gaz provenant de la source de réglage.

9. Système de dépôt (1) selon la revendication 3, dans lequel le système pneumatique (6) comprend plusieurs sources de dépôt (P1, Pᵢ), chacune desdites plusieurs sources de dépôt étant agencée pour produire du gaz à une pression de source (PS, PSⱼ) différente de chacune des autres pressions de source des autres sources de dépôt.

10. Système de dépôt (1) selon la revendication 9, dans lequel chaque pression de source (PS, PSⱼ) est égale à une pression de dépôt (PD, PDᵢ) différente.

11. Système de dépôt (1) selon la revendication 9, dans lequel au moins une pression de source (PS, PSⱼ) est supérieure à la pression de dépôt (PD), ou à chaque pression de dépôt (PDᵢ).

12. Système de dépôt (1) selon la revendication 9, dans lequel au moins une pression de source (PSⱼ) est inférieure à la pression de dépôt (PD), ou à chaque pression de dépôt (PDᵢ).

13. Système de dépôt (1) selon l'une quelconque des revendications 10 à 12, dans lequel le système pneumatique (6) est agencé de sorte que la pression de dépôt (PD), ou plusieurs des pressions de dépôt (PDᵢ), de gaz injecté dans le contenant (2) est obtenue par :
- mélange de gaz provenant de la source de réglage (R) et de gaz provenant d'au moins une des sources de dépôt (P1, Pᵢ), et/ou
- mélange de gaz provenant d'une source de dépôt et de gaz provenant d'au moins une autre des sources de dépôt, et/ou
- diminution ou augmentation de la pression de gaz provenant d'au moins une des sources de dépôt, et/ou
- augmentation de la pression de gaz provenant de la source de réglage.

14. Système de dépôt (1) selon l'une quelconque des revendications 3 à 13, dans lequel la source de réglage (R) et/ou chaque source de dépôt (P1, Pᵢ) est un réservoir (9) stockant du gaz à sa pression respective de réglage (PM) et/ou de source (PS, PSⱼ).

15. Système de dépôt (1) selon la revendication 14, dans lequel chaque réservoir (9) considéré présente un volume au moins 5 fois, de préférence au moins 10 fois, supérieur à la somme du volume du contenant (2) et du volume d'un circuit de gaz (10, 11, 20, 25, 26) reliant ce réservoir considéré à l'entrée (4).

16. Système de dépôt (1) selon l'une quelconque des revendications 3 à 15, dans lequel les moyens de commande (611, 612, 613, 614, 615) comprennent une vanne multivoies (613), dite de commutation, reliée :
- à l'entrée (4) du contenant (2),
- à au moins une des sources (R, P1, Pᵢ),
- à un système de remise à l'air (171),
ladite vanne multivoies étant agencée pour commuter d'une injection de gaz provenant d'une source de dépôt ou de réglage vers une injection de gaz provenant d'une autre source de dépôt ou de réglage de manière à opérer un changement instantané de pression dans le contenant.

17. Système de dépôt (1) selon l'une quelconque des revendications précédentes, dans lequel la pression de réglage (PM) et la pression de dépôt (PD), ou chacune des pressions de dépôt (PDᵢ), sont inférieures ou égales à 200 kPa au-dessus de la pression atmosphérique.

18. Système de dépôt (1) selon l'une quelconque des revendications précédentes, dans lequel la pression de réglage (PM) est inférieure à la pression atmosphérique.

19. Système de dépôt (1) selon l'une quelconque des revendications précédentes, comprenant un système de mise en mouvement agencé pour :
- mettre en mouvement le contenant (2) relativement à une surface de dépôt (23), ou inversement, dans un plan parallèle à la surface de dépôt, dit plan xy, selon un trajet prédéterminé, et/ou
- éloigner et/ou rapprocher le contenant relativement de la surface de dépôt, ou inversement.

20. Système de dépôt (1) selon la revendication 19, comprenant une unité de traitement programmée et/ou configurée pour commander une quantité de matière déposée sur la surface de dépôt (23) en fonction d'une position relative du contenant (2) par rapport à ladite surface en opérant :
- une modification, et/ou une adaptation, de la vitesse relative du contenant par rapport à la surface de dépôt, ou inversement, et/ou
- une modification, et/ou une adaptation, d'une distance entre la sortie (5) du contenant et la surface de dépôt, et/ou
- une modification, et/ou une adaptation, de la pression de dépôt (PD, PDᵢ) sélectionnée.

21. Système de dépôt (1) selon la revendication 20, comprenant un ou plusieurs dispositifs d'imagerie optique agencés pour imager une zone de dépôt, et/ou une zone comprenant la sortie (5) du contenant (2), et/ou au moins une partie de la surface de dépôt (23), de sorte que l'unité de traitement soit agencée pour contrôler la quantité de matière déposée et/ou la position relative du contenant par rapport à la surface de dépôt et, en fonction de ce contrôle, soit agencée pour modifier et/ou ajuster :
- la pression de gaz injecté dans le contenant, et/ou
- une vitesse de déplacement relative du contenant par rapport à la surface de dépôt, ou inversement, et/ou
- la distance entre la sortie et la surface de dépôt, et/ou
- la position relative du contenant par rapport à la surface de dépôt.

22. Système de dépôt (1) selon la revendication 20 ou 21, comprenant un capteur de distance agencé pour, préalablement au dépôt de la matière à déposer (3), mesurer une topographie de la surface de dépôt (23) le long du trajet prédéterminé selon lequel sera déposée la matière à déposer de sorte à, lors du dépôt, maintenir constante une distance entre la sortie (5) du contenant (2) et la surface de dépôt lors du déplacement du contenant selon le trajet prédéterminé.

23. Système de dépôt (1) selon l'une quelconque des revendications 17 à 22 considérée comme dépendante de la revendication 16, dans lequel les moyens de commande (611, 612, 613, 614, 615) comprennent une vanne multivoies de régulation de pression (615), dite vanne de dépôt, étant située, par rapport à un chemin de gaz s'étendant depuis les sources de réglage (R) et de dépôt (P1, Pᵢ) vers le contenant (2), en aval de la source de dépôt et en amont de la vanne multivoies de commutation (613) et étant agencée pour diminuer, ou respectivement augmenter, la pression du gaz d'une source de dépôt jusqu'à une pression de dépôt intermédiaire (PD_{INT}) inférieure, ou respectivement supérieure, à la pression de source (PS, PSⱼ) de cette source de dépôt et supérieure à la pression de réglage (PM),
et dans lequel les moyens de commande sont agencés pour délivrer du gaz à la pression de dépôt intermédiaire dans une partie d'un circuit (11), constituant une source de dépôt, reliant ladite vanne de dépôt à ladite vanne multivoies de commutation.

24. Procédé de dépôt mis en œuvre dans un système de dépôt (1), ledit système comprenant :
- un contenant (2) dans lequel se trouve de la matière à déposer (3) et comprenant une entrée (4) et une sortie (5),
- un système pneumatique (6) comprenant des moyens de commande (611, 612, 613, 614, 615) du système pneumatique,
le système pneumatique injectant, par l'entrée, du gaz dans le contenant de sorte que ce gaz exerce, directement ou indirectement, une pression sur la matière à déposer, le procédé comprenant une commande, par les moyens de commande du système pneumatique :
• d'une injection, par l'entrée, de gaz à une pression de réglage (PM), de sorte qu'un ménisque convexe (7) de matière à déposer fasse saillie du contenant au niveau de la sortie, puis
• d'au moins une injection, par l'entrée, de gaz respectivement à au moins une pression de dépôt (PD, PDᵢ) supérieure à la pression de réglage, de sorte que la matière à déposer s'écoule en un dépôt de matière hors du contenant par la sortie sur une surface de dépôt (23).

25. Procédé selon la revendication 24 comprenant une commande, par les moyens de commande (611, 612, 613, 614, 615), de plusieurs injections, par l'entrée (4), de gaz à plusieurs pressions de dépôt (PD, PDᵢ) différentes les unes des autres, de sorte que la matière à déposer (3) s'écoule selon des vitesses différentes hors du contenant (2) par la sortie (5), lesdites pressions de dépôt étant supérieures à la pression de réglage (PM).

26. Procédé selon la revendication 24 ou 25, comprenant :
- entre l'injection de gaz à la pression de réglage (PM) et l'au moins une injection de gaz à l'au moins une pression de dépôt (PD, PDᵢ), une diminution d'une distance (f) entre le ménisque (7) et la surface de dépôt (23) jusqu'à formation d'un pont capillaire (24) entre ladite surface de dépôt et le ménisque,
- subséquemment à la formation du pont capillaire, l'au moins une injection de gaz à l'au moins une pression de dépôt (PD, PDᵢ),
- subséquemment à l'au moins une injection de gaz à l'au moins une pression de dépôt (PD, PDᵢ), une nouvelle injection de gaz à la pression de réglage de sorte que la matière à déposer (3) ne s'écoule plus du contenant (2),
- subséquemment à la nouvelle injection de gaz à la pression de réglage, une augmentation de la distance entre le ménisque et la surface de dépôt jusqu'à une rupture du pont capillaire entre la surface de dépôt et le ménisque.

27. Procédé selon l'une quelconque des revendications 24 à 26, dans lequel le système pneumatique (6) comprend une source (R), dite de réglage, produisant du gaz à la pression de réglage (PM) et au moins une source (P1, Pᵢ), dite de dépôt, produisant du gaz à au moins une pression de source (PS, PSⱼ), ladite au moins une pression de source étant, de préférence, au moins 1,01 fois, de préférence encore au moins 1,015 fois, supérieure à la pression de réglage.

## Patentansprüche

1. Abscheidesystem (1), mit:
- einem Behälter (2), der eingerichtet ist, abzuscheidendes Material (3) aufzunehmen, und einen Eingang (4) und einen Ausgang (5) aufweist,
- einem pneumatischen System (6), das eingerichtet ist, um Gas durch den Eingang in den Behälter zu injizieren, sodass das Gas direkt oder indirekt einen Druck auf das abzuscheidende Material ausübt,
wobei das Abscheidesystem Steuerungsmittel (611, 612, 613, 614, 615) des pneumatischen Systems aufweist, die eingerichtet sind, um zumindest das Folgende zu steuern:
• eine Gasinjektion durch den Eingang bei einem Regeldruck (PM), sodass ein konvexer Meniskus (7) des abzuscheidende Materials an dem Ausgang aus dem Behälter hervorragt, dann
• zumindest eine Gasinjektion durch den Eingang bei je zumindest einem Abscheidedruck (PD, PDᵢ), der größer ist als der Regeldruck, sodass das abzuscheidende Material aus dem Behälter durch den Ausgang abläuft.

2. Abscheidesystem (1) nach Anspruch 1, wobei die Steuerungsmittel (611, 612, 613, 614, 615) des pneumatischen Systems (6) eingerichtet sind, um mehrere Gasinjektionen durch den Eingang (4) mit mehreren, voneinander verschiedenen Abscheidedrücken (PD, PDᵢ) zu steuern, sodass das abzuscheidende Material (3) mit entsprechenden verschiedenen Geschwindigkeiten aus dem Behälter (2) durch den Ausgang (5) abläuft, wobei die Abscheidedrücke größer sind als der Regeldruck (PM).

3. Abscheidesystem (1) nach Anspruch 1 oder 2, wobei das pneumatische System (6) eine als Regelquelle bezeichnete Quelle (R) aufweist, die eingerichtet ist, um Gas bei einem Regeldruck (PM) zu erzeugen, und zumindest eine als Abscheidequelle bezeichnete Quelle (P1, Pᵢ), die eingerichtet ist, um Gas bei zumindest einem Quelldruck (PS, PSj) zu erzeugen, wobei der zumindest eine Quelldruck bevorzugt zumindest 1,01 -mal, besonders bevorzugt zumindest 1,015-mal, größer als der Regeldruck ist.

4. Abscheidesystem (1) nach Anspruch 3, wobei das pneumatische System (6) eine einzige Abscheidequelle (P1) aufweist.

5. Abscheidesystem (1) nach Anspruch 4, wobei der Quellendruck (PS) größer ist als der Abscheidedruck (PD) oder als zumindest einer der Abscheidedrücke (PDᵢ).

6. Abscheidesystem (1) nach Anspruch 4, wobei der Quellendruck (PS) kleiner ist als der Abscheidedruck (PD) oder als zumindest einer der Abscheidedrücke (PDᵢ).

7. Abscheidesystem (1) nach einem der Ansprüche 4 bis 6, wobei der Quelldruck (PS) gleich dem Abscheidedruck (PD), oder einem der Abscheidedrücke (PDi) ist.

8. Abscheidesystem (1) nach einem der Ansprüche 4 bis 7, wobei das pneumatische System (6) so eingerichtet ist, dass der Abscheidedruck (PD) oder mehrere Abscheidedrücke (PDi) des in den Behälter (2) injizierten Gases erhalten wird durch:
- ein Mischen von von der Regelquelle (R) stammendem Gas und von der Abscheidequelle (P1) stammendem Gas, und/oder
- einem Verringern oder Erhöhen von dem von der Abscheidequelle stammendem Gas, und/oder
- einem Erhöhen des Drucks des von der Regelquelle stammenden Gases.

9. Abscheidesystem (1) nach Anspruch 3, wobei das pneumatische System (6) mehrere Abscheidequellen (P1, Pi) aufweist, wobei jede der Abscheidequellen eingerichtet ist, um Gas bei einem Quelldruck (PS, PSj) zu erzeugen, der von jedem der anderen Quelldrücke der anderen Abscheidequellen abweicht.

10. Abscheidesystem (1) nach Anspruch 9, wobei jeder Quelldruck (PS, PSj) gleich je einem anderem Abscheidedruck (PD, PDᵢ) ist.

11. Abscheidesystem (1) nach Anspruch 9, wobei zumindest ein Quelldruck (PS, PSj) größer ist als der Abscheidedruck (PD) oder als alle Abscheidedrücke (PDᵢ).

12. Abscheidesystem (1) nach Anspruch 9, wobei zumindest ein Quelldruck (PS, PSj) kleiner ist als der Abscheidedruck (PD), oder als alle Abscheidedrücke (PDᵢ).

13. Abscheidesystem (1) nach einem der Ansprüche 10 bis 12, wobei das pneumatische System (6) so eingerichtet ist, dass der Abscheidedruck (PD) oder mehrere der Abscheidedrücke (PDi) des in den Behälter (2) injizierten Gases erhalten wird durch:
- ein Mischen von von der Regelquelle (R) stammendem Gas und von zumindest einer der Abscheidequellen (P1, Pi) stammendem Gas, und/oder
- ein Verringern oder Erhöhung von dem von zumindest einer der Abscheidequellen stammendem Gas, und/oder
- ein Erhöhnn des Drucks des von der Regelquelle stammenden Gases.

14. Abscheidesystem (1) nach einem der Ansprüche 3 bis 13, wobei die Regelquelle (R) und/oder jede Abscheidequelle (P1, Pi) ein Reservoir (9) ist, das Gas bei seinem jeweiligen Regeldruck (PM) und/oder Quelldruck (PS, PSj) speichert.

15. Abscheidesystem (1) nach Anspruch 14, wobei jedes Reservoir (9) ein Volumen aufweist, das zumindest 5 mal, bevorzugt zumindest 10 mal größer ist als die Summe aus dem Volumens des Behälters (2) und dem Volumen einer Gasleitung (10, 11, 20, 25, 26) ist, die das betrachtete Reservoir mit dem Eingang (4) verbindet.

16. Abscheidesystem (1) nach einem der Ansprüche 3 bis 15, wobei die Steuerungsmittel (611, 612, 613, 614, 615) ein als Umschalt-Mehrwegeventil bezeichnetes Mehrwegeventil (613) aufweisen, das verbunden ist mit:
- dem Eingang (4) des Behälters (2)
- zumindest einer der Quellen (R, P1, Pᵢ),
- einem Belüftungssystem (171),
wobei das Mehrwegeventil eingerichtet ist, um von einer Injektion von Gas, das von einer Abscheidequelle oder Regelquelle stammt, zu einer Injektion von Gas umzuschalten, das von einer anderen Abscheidequelle oder Regelquelle stammt, um einen sofortigen Druckwechsel im Behälter zu erzielen.

17. Abscheidesystem (1) nach einem der vorstehenden Ansprüche, wobei der Regeldruck (PM) und der Abscheidedruck (PD), oder jeder der Abscheidedrücke (PDi) kleiner gleich 200 kPa oberhalb des Atmosphärendrucks sind.

18. Abscheidesystem (1) nach einem der vorstehenden Ansprüche, wobei der Regeldruck (PM) kleiner ist als der Atmosphärendruck.

19. Abscheidesystem (1) nach einem der vorstehenden Ansprüche, wobei das Abscheidesystem ein Antriebssystem aufweist, das eingerichtet ist, um:
- den Behälter (2) relativ zu einer Abscheidefläche (23) oder umgekehrt in einer als xy-Ebene bezeichneten Ebene parallel zu der Abscheidefläche entlang einer vorbestimmten Bahn in Bewegung zu versetzen, und/oder
- den Behälter relativ zu der Abscheidefläche dieser anzunähern und/oder von dieser zu entfernen, oder umgekehrt.

20. Abscheidesystem (1) nach Anspruch 19, wobei das Abscheidesystem eine Verarbeitungseinheit aufweist, die programmiert und/oder eingerichtet ist, um eine Menge des auf der Abscheidefläche (23) abzuscheidenden Materials in Abhängigkeit von einer relativen Position des Behälters (2) bezüglich der Fläche zu steuern, indem:
- eine Änderung und/oder Anpassung der relativen Geschwindigkeit des Behälters bezüglich der Abscheidefläche, oder umgekehrt, und/oder
- eine Änderung und/oder Anpassung eines Abstands zwischen dem Ausgang (5) des Behälters und der Abscheidefläche, und/oder
- eine Änderung und/oder Anpassung des ausgewählten Abscheidedrucks (PD, PDᵢ) vorgenommen wird.

21. Abscheidesystem (1) nach Anspruch 20, wobei das Abscheidesystem ein oder mehrere optische Bildgebungsvorrichtungen aufweist, die eingerichtet sind, um eine Abscheidezone und/oder eine Zone, die den Ausgang (5) des Behälters (2) umfasst, und/oder zumindest einen Teil der Abscheidefläche (23) abzubilden, sodass die Verarbeitungseinheit eingerichtet ist, die Menge des abzuscheidenden Materials und/oder die relative Position des Behälters bezüglich der Abscheidefläche zu prüfen und in Abhängigkeit dieser Prüfung eingerichtet ist, um:
- den Druck von in den Behälter injiziertem Gas, und/oder
- eine Geschwindigkeit der Relativbewegung des Behälters bezüglich der Abscheidefläche oder umgekehrt, und/oder
- die relative Position des Behälters bezüglich der Abscheidefläche zu ändern und/oder anzupassen.

22. Abscheidesystem (1) nach Anspruch 20 oder 21, wobei das Abscheidesystem einen Entfernungssensor aufweist, der eingerichtet ist, um im Vorfeld der Abscheidung des abzuscheidenden Materials eine Topographie der Abscheidefläche (23) entlang der vorbestimmten Bahn zu vermessen, entlang derer das abzuscheidende Material abgeschieden wird, sodass während der Abscheidung eine Entfernung zwischen dem Ausgang (5) des Behälters (2) und der Abscheidefläche während der Bewegung des Behälters entlang der vorbestimmten Bahn konstant gehalten wird.

23. Abscheidesystem (1) nach einem als von Anspruch 16 abhängig betrachteten Anspruch der Ansprüche 17 bis 22, wobei die Steuerungsmittel (611, 612, 613, 614, 615) ein als Abscheideventil bezeichnetes Mehrwege-Druckregulierungsventil (615) aufweisen, das bezüglich eines sich von der Regelquelle (R) und den Abscheidequellen (P1, Pi) hin zu dem Behälter (2) erstreckenden Gaswegs der Abscheidequelle nachgelagert und dem Umschalt-Mehrwegeventil (613) vorgelagert angeordnet ist und eingerichtet ist, um den Druck des Gases einer Abscheidequelle auf einen intermediären Abscheidedruck (PD_{INT}) abzusenken bzw. zu erhöhen, der kleiner bzw. größer ist als der Quelldruck (PS, PSⱼ) dieser Abscheidequelle und größer ist als der Regeldruck (PM),
und wobei die Steuerungsmittel eingerichtet sind, Gas bei dem intermediären Zwischendruck in einen Teil einer Gasleitung (11) zu fördern, der eine Abscheidequelle darstellt und das Abscheideventil mit dem Umschalt-Mehrwegeventil verbindet.

24. Abscheideverfahren, ausgeführt in einem Abscheidesystem (1), wobei das System aufweist:
- einen Behälter (2), in dem sich das abzuscheidende Material (3) befindet, und der einen Eingang (4) und einen Ausgang (5) aufweist,
- ein pneumatisches System (6), das Steuerungsmittel (611, 612, 613, 614, 615) des pneumatischen Systems aufweist,
wobei das pneumatische System Gas durch den Eingang in den Behälter injiziert, sodass das Gas direkt oder indirekt einen Druck auf das abzuscheidende Material ausübt, wobei das Verfahren eine Steuerung mittels der Steuerungsmittel des pneumatischen Systems aufweist zum Durchführen von:
∘ einer Gasinjektion durch den Eingang bei einem Regeldruck (PM), sodass ein konvexer Meniskus (7) des abscheidenden Materials bei dem Ausgang aus dem Behälter hervorragt, dann
∘ zumindest einer Gasinjektion durch den Eingang bei jeweils zumindest einem Abscheidedruck (PD, PDᵢ), der größer ist als der Regeldruck, sodass das abzuscheidende Material als ein abgeschiedenes Material aus dem Behälter durch den Ausgang auf eine Abscheidefläche (23) abläuft.

25. Verfahren nach Anspruch 24 mit einer Steuerung von mehreren Gasinjektionen durch den Eingang (4) bei mehreren voneinander verschiedenen Abscheidedrücken (PD, PDᵢ) durch die Steuerungsmittel (611, 612, 613, 614, 615), sodass das abzuscheidende Material (3) mit jeweils unterschiedlichen Geschwindigkeiten aus dem Behälter (2) durch den Ausgang (5) abläuft, wobei die Abscheidedrücke größer sind als der Regeldruck (PM).

26. Verfahren nach Anspruch 24 oder 25, mit
- zwischen der Gasinjektion bei dem Regeldruck (PM) und der zumindest einen Gasinjektion bei dem zumindest einen Abscheidedruck (PD, PDᵢ) einer Verringerung einer Entfernung (f) zwischen dem Meniskus (7) und der Abscheidefläche (23) bis zur Bildung einer Kapillarbrücke (24) zwischen der Abscheidefläche und dem Meniskus,
- in der Folge der Bildung der Kapillarbrücke mit der zumindest einen Gasinjektion bei dem zumindest einen Abscheidedruck (PD, PDᵢ),
- in der Folge der zumindest einen Gasinjektion bei dem zumindest einen Abscheidedruck (PD, PDᵢ) mit einer neuen Gasinjektion bei dem Regeldruck, sodass das abzuscheidende Material (3) nicht mehr aus dem Behälter (2) abläuft,
- nachfolgend ein erneutes Injizieren des Gases bei dem Regeldruck mit einer Erhöhung der Entfernung zwischen dem Meniskus und der Abscheidefläche bis zu einem Abreißen der durch Kapillarkräfte bedingten Materialverbindung zwischen der Abscheidefläche und dem Meniskus.

27. Verfahren nach einem der Ansprüche 24 bis 26, wobei das pneumatische System (6) eine als Regelquelle bezeichnete Quelle (R) aufweist, die Gas bei dem Regeldruck (PM) produziert, und zumindest eine als Abscheidequelle bezeichnete Quelle (P1, Pᵢ), die Gas bei zumindest einem Quelldruck (PS, PSⱼ) produziert, wobei der zumindest eine Quelldruck bevorzugt 1,01-mal, besonders bevorzugt zumindest 1,015-mal, größer als der Regeldruck ist.

## Claims

1. Deposition system (1) comprising:
- a container (2) arranged to contain material to be deposited (3) and comprising an inlet (4) and an outlet (5),
- a pneumatic system (6) arranged to inject, through the inlet, gas into the container such that this gas exerts, directly or indirectly, a pressure on the material to be deposited,
the deposition system comprising control means (611, 612, 613, 614, 615) of the pneumatic system arranged to control at least:
• an injection, through the inlet, of gas at an adjusting pressure (PM), so that a convex meniscus (7) of material to be deposited protrudes from the container at the outlet, and then
• at least one injection, through the inlet, of gas at respectively at least one deposition pressure (PD, PDᵢ) greater than the adjusting pressure, so that the material to be deposited flows out of the container through the outlet.

2. Deposition system (1) according to claim 1, wherein the control means (611, 612, 613, 614, 615) of the pneumatic system (6) are arranged to control several injections, through the inlet (4), of gas at several deposition pressures (PD, PDᵢ) different from each other so that the material to be deposited (3) flows out of the container (2) through the outlet (5) at different speeds, said deposition pressures being greater than the adjusting pressure (PM).

3. Deposition system (1) according to claim 1 or 2, wherein the pneumatic system (6) comprises a source (R), called adjusting source, arranged to produce gas at the adjusting pressure (PM) and at least one source (P1, Pᵢ), called deposition source, arranged to produce gas at at least one source pressure (PS, PSⱼ), said at least one source pressure being preferably at least 1.01 time, more preferably at least 1.015 times, greater than the adjusting pressure.

4. Deposition system (1) according to claim 3, wherein the pneumatic system (6) comprises a single deposition source (P1).

5. Deposition system (1) according to claim 4, wherein the source pressure (PS) is greater than the deposition pressure (PD), or than at least one of the deposition pressures (PDᵢ).

6. Deposition system (1) according to claim 4, wherein the source pressure (PS) is lower than the deposition pressure (PD), or than at least at one of deposition pressures (PDᵢ).

7. Deposition system (1) according to any one of claims 4 to 6, wherein the source pressure (PS) is equal to the deposition pressure (PD), or to one of the deposition pressures (PDᵢ).

8. Deposition system (1) according to any one of claims 4 to 7, wherein the pneumatic system (6) is arranged such that the deposition pressure (PD), or more of the deposition pressures (PDᵢ), of gas injected into the container (2) is obtained by :
- mixing gas from the adjusting source (R) and gas from the deposition source (P1), and/or
- decreasing or increasing of the gas pressure from the deposition source, and/or
- increasing the gas pressure from the adjusting source.

9. Deposition system (1) according to claim 3, wherein the pneumatic system (6) comprises a plurality of deposition sources (P1, Pᵢ), each of said plurality of deposition sources being arranged to produce gas at a source pressure (PS, PSⱼ) different from each of the other source pressures of the other deposition sources.

10. Deposition system (1) according to claim 9, wherein each source pressure (PS, PSⱼ) is equal to a different deposition pressure (PD, PDᵢ).

11. Deposition system (1) according to claim 9, wherein at least one source pressure (PS, PSj) is greater than the deposition pressure (PD), or than each deposition pressure (PDi).

12. Deposition system (1) according to claim 9, wherein at least one source pressure (PSj) is lower than the deposition pressure (PD), or than each deposition pressure (PDi).

13. Deposition system (1) according to any of claims 10 to 12, wherein the pneumatic system (6) is arranged so that the deposition pressure (PD), or more of the deposition pressures (PDi), of gas injected into the container (2) is obtained by:
- mixing gas from the adjusting source (R) and gas from at least one of the deposition sources (P1, Pi), and/or
- mixing gas from a deposition source and gas from at least one of the other deposition sources, and/or
- decreasing or increasing the gas pressure, said from at least one of the deposition sources, and/or
- increasing the gas pressure from the adjusting source.

14. Deposition system (1) according to any one of claims 3 to 13, wherein the adjusting source (R) and/or each deposition source (P1, Pi) is a gas tank (9) storing gas at its respective adjusting pressure (PM) and/or source pressure (PS, PSj).

15. Deposition system (1) according to claim 14, wherein each considered gas tank (9) has a volume at least 5 times, preferably at least 10 times, greater than the sum of the volume of the container (2) and the volume of a gas circuit (10, 11, 20, 25, 26) connecting this considered gas tank to the inlet (4).

16. Deposition system (1) according to any one of claims 3 to 15, wherein the control means (611, 612, 613, 614, 615) comprise a multichannel valve (613), called switching valve, connected to:
- the inlet (4) of the container (2),
- at least one of the sources (R, P1, Pi),
- a venting system (171),
said multichannel valve being arranged to switch from an injection of gas from a deposition source or from an adjusting source towards an injection of gas from another deposition source or adjusting source so as to produce an instantaneous change in pressure in the container.

17. Deposition system (1) according to any preceding claim, wherein the adjusting pressure (PM) and the deposition pressure (PD), or each of the deposition pressures (PDᵢ), are lower than or equal to 200 kPa above atmospheric pressure.

18. Deposition system (1) according to one of the preceding claims, wherein the adjusting pressure (PM) is lower than the atmospheric pressure.

19. Deposition system (1) according to any of the preceding claims, comprising a system arranged to:
- setting in motion the container (2) relatively to a deposition surface (23), or conversely, in a plane parallel to the deposition surface, said plane xy, according to a predetermined path, and/or
- moving away and/or bringing closer the container relatively to the deposition surface, or conversely.

20. Deposition system (1) according to claim 19, comprising a processing unit programmed and/or configured to control an amount of material deposited on the deposition surface (23) depending on a relative position of the container (2) with respect to said surface by producing:
- a modification, and/or an adaptation, of the relative velocity of the container with respect to the deposition surface, or conversely, and/or
- a modification, and/or an adaptation, of a distance between the outlet (5) of the container and the deposition surface, and/or
- a modification, and/or adaptation, of the deposition pressure (PD, PDᵢ) selected.

21. Deposition system (1) according to claim 20, comprising one or more optical imaging devices arranged to image a deposition area, and/or an area comprising the outlet (5) of the container (2), and/or at least a part of the deposition area (23), so that the processing unit is arranged to monitoring the amount of material deposited and/or the relative position of the container with respect to the deposition surface and, depending on this monitoring, is arranged to modify and/or adjust:
- the gas pressure injected into the container, and/or
- a relative movement speed of the container relative to the deposition area, or conversely, and / or
- the distance between the outlet and the deposition area, and/or
- the relative position of the container relative to the deposition surface.

22. Deposition system (1) according to the claim 20 or 21, comprising a distance sensor arranged to, prior to the deposition of the material to be deposited (3), measuring a topography of the deposition surface (23) along the predetermined path along which the material to be deposited will be deposited so as, during the deposition, to maintain a constant distance between the outlet (5) of the container (2) and the deposition surface during displacement of container according to the predetermined path.

23. Deposition system (1) according to any of the claims 17 to 22 considered dependent of claim 16, wherein the control means (611, 612, 613, 614, 615) comprise a pressure regulating multichannel valve (615), said deposition valve, being located, with respect to a gas path extending from the adjusting (R) and deposition sources (P1, Pᵢ) to the container (2), downstream of the deposition source and upstream of the multichannel switching valve (613) and being arranged for decrease, or respectively increase, the gas pressure of a deposition source to an intermediate deposition pressure (PD_{INT}) lower than, or respectively greater than, the source pressure (PS, PSⱼ) of this deposition source and greater than the adjusting pressure (PM),
and wherein the control means are arranged to supply gas at the intermediate deposition pressure in a portion of a circuit (11), constituting a deposition source, connecting said deposition valve to said multichannel switching valve.

24. Deposition method implemented in a deposition system (1), said system comprising:
- a container (2) in which there is material to be deposited (3) and comprising an inlet (4) and an outlet (5),
- a pneumatic system (6) comprising control means (611, 612, 613, 614, 615) of the pneumatic system,
said method being **characterized in that** the pneumatic system injects, through the inlet, gas into the container so that the gas exerts, directly or indirectly, a pressure on the material to be deposited, the method comprising a control, by the control means of the pneumatic system:
• of an injection of gas, via the inlet, at an adjusting pressure (PM), so that a convex meniscus (7) of material to be deposited protrudes from the container at the outlet, and
• of at least one injection of gas, though the inlet, at respectively at least one deposition pressure (PD, PDᵢ) greater than the adjusting pressure, so that the material to be deposited flows out of the container in a material deposition on a deposition surface (23).

25. Method according to the claim 24, comprising a control, by the control means (611, 612, 613, 614, 615), of several injections, through the inlet (4), of gas at several deposition pressures (PD, PDᵢ) different from each other, so that the material to be deposited (3) flows at different speeds out of the container (2) through the outlet (5), said deposition pressures being greater than the adjusting pressure (PM).

26. Method according to claim 24 or 25, comprising:
- between the gas injection at the adjusting pressure (PM) and the at least one gas injection at the least at the one deposition pressure (PD, PDᵢ), a decrease of a distance (f) between the meniscus (7) and the deposition area (23) until a capillary bridge (24) is formed between said deposition surface and the meniscus,
- subsequent to the formation of the capillary bridge, the at least at the one gas injection at the at least one deposition pressure (PD, PDᵢ),
- subsequent to the at least one injection of gas at the at least one deposition pressure (PD, PDᵢ), a new gas injection at the adjusting pressure so that the material to be deposited (3) no longer flows out of the container (2),
- subsequent to the new gas injection at the adjusting pressure, an increase of the distance between the meniscus and the deposition surface until rupture of the capillary bridge between the deposition surface and the meniscus.

27. Method according to any of claims 24 to 26, wherein the pneumatic system (6) comprises a source (R), called adjusting source, producing gas at the adjusting pressure (PM) and at least one source (P1, Pᵢ), called deposition source, producing gas at at least one source pressure (PS, PSⱼ), said at least one source pressure being preferably, at least 1.01 times, more preferably at least 1.015 times, greater than the adjusting pressure.
